# EUROPÄISCHE PATENTSCHRIFT

(11) **EP 0 904 222 B1**
(45) Veröffentlichungstag und Bekanntmachung des Hinweises auf die Patenterteilung: **05.11.2003**
(21) Anmeldenummer: 98919066.5
(22) Anmeldetag: 10.03.1998
(51) Int. Cl.: B60T 8/00, B60T 13/18, B60T 8/40

(54) **VERFAHREN UND VORRICHTUNG ZUR ERMITTLUNG EINER DEN SYSTEMDRUCK IN EINEM BREMSKREIS BESCHREIBENDEN GRÖSSE**
METHOD AND DEVICE FOR DETERMINING A VALUE REPRESENTING THE SYSTEM PRESSURE IN A BRAKE CIRCUIT
PROCEDE ET DISPOSITIF POUR DETERMINER UNE GRANDEUR REPRESENTANT LA PRESSION DE SYSTEME DANS UN CIRCUIT DE FREINAGE

(30) Priorität: 27.03.1997 DE 19712889
(43) Veröffentlichungstag der Anmeldung: 31.03.1999
(73) Patentinhaber: ROBERT BOSCH GMBH, 70442 Stuttgart (DE)
(72) Erfinder: ERBAN, Andreas, D-74321 Bietigheim-Bissingen (DE); WEISS, Karl-Josef, D-70374 Stuttgart (DE); GERDES, Manfred, D-71735 Eberdingen-Hochdorf (DE)
(86) Internationale Anmeldenummer: DE9800692
(87) Internationale Veröffentlichungsnummer: WO98043860

(56) Entgegenhaltungen:
- DE-A- 4 442 326
- DE-A- 19 611 360
- DE-C- 4 102 497

## Beschreibung

### Stand der Technik

Die Erfindung betrifft ein Verfahren bzw. eine Vorrichtung zur Ermittlung einer den Systemdruck in einem Bremskreis beschreibenden Größe. Die Bezeichnung "Systemdruck in einem Bremskreis" ist gleichbedeutend mit dem Begriff "Bremskreisdruck", weshalb letzterer nachfolgend verwendet wird.

Verfahren und Vorrichtungen zur Ermittlung einer den Bremskreisdruck beschreibenden Größe sind aus dem Stand der Technik in vielerlei Modifikationen bekannt.

In der DE-OS 43 40 921 ist ein Bremsdruckregelsystem beschrieben, bei dem u.a. für jeden Bremskreis der Bremskreisdruck geschätzt wird. Die in der DE-OS 43 40 921 offenbarte Hydraulik umfaßt zwei Bremskreise. Jeder der beiden Bremskreise weist zwei Räder auf, die jeweils über ein Auslaß- bzw. Einlaßventil mit dem Bremskreis in Verbindung stehen. Ferner weist jeder Bremskreis eine Vorladepumpe, eine Rückförderpumpe, ein Rücklaufventil sowie ein Umschaltventil auf. Mit den beiden Pumpen kann vor den Einlaßventilen ein Bremsdruck erzeugt werden, wenn an den Rädern Bremsdruck aufgebaut werden soll. Das Rücklauf- bzw. Umschaltventil ist entsprechend anzusteuern. Mit dem dem jeweiligen Rad zugeordneten Einlaß- bzw. Auslaßventil kann der gewünschte Bremsdruck in der entsprechenden Radbremse eingesteuert werden. Bezogen auf einen Bremskreis werden ausgehend von Sollbremsdrücken für die Radbremszylinder zumindest für die Einlaßventile Ventilansteuersignale ermittelt. In die Ermittlung der Sollbremsdrücke gehen die Bremszylinderdrücke ein, wobei bei der Ermittlung der Bremszylinderdrücke der jeweilige Bremskreisdruck sowie die Ansteuerzeiten der Einlaßventile berücksichtigt werden. Der Bremskreisdruck wird mit Hilfe eines rekursiven Verfahrens geschätzt. Bei der Schätzung des Bremskreisdruckes werden zwei Situationen unterschieden. In der einen Situation liegt ein geforderter Druckaufbau vor, d.h. sowohl die Vorladepumpe als auch die Rückförderpumpe sind bestromt und das Rücklauf- bzw. Umschaltventil sind entsprechend beschaltet. In dieser Situation wird davon ausgegangen, daß die beiden Pumpen einen konstanten Volumenstrom liefern. Der neue Wert für den geschätzten Bremskreisdruck ergibt sich in Abhängigkeit des alten geschätzten Wertes des Bremskreisdruckes, der Ansteuerzeiten der im Bremskreis enthaltenen Einlaßventile, der Radbremszylinderdrücke, sowie des durch den Fahrer eingestellten Vordruckes. In der anderen Situation sind die beiden Pumpen abgeschaltet. Hierbei ergibt sich der neue Wert für den geschätzten Bremskreisdruck in Abhängigkeit des alten geschätzten Wertes des Bremskreisdruckes sowie des durch den Fahrer eingestellten Vordruckes. Der alte geschätzte Wert des Bremskreisdruckes wird dabei mit einem konstanten Faktor so bewertet, daß der sich im Bremskreis ergebende Druckabbau nachgebildet wird.

Aus der DE 44 42 326 A ist ein Verfahren und eine Vorrichtung zur Ermittlung einer Druckgröße bei einer Bremsanlage bekannt.

Das in der vorliegenden Anmeldung beschriebene Verfahren bzw. die in der vorliegenden Anmeldung beschriebene Vorrichtung zur Ermittlung einer den Bremskreisdruck repräsentierenden Größe kann in Verbindung mit Systemen zur Regelung des Bremsschlupfes bzw. des Antriebsschlupfes sowie in Verbindung mit Systemen zur Regelung einer die Fahrdynamik eines Fahrzeuges beschreibenden Größe eingesetzt werden. Systeme zur Regelung des Bremsschlupfes bzw. des Antriebsschlupfes sind in allgemeiner Form beispielsweise aus dem von der Robert Bosch GmbH Stuttgart herausgegebenen Buch "Bremsanlagen für Kraftfahrzeuge", VDI-Verlag, Düsseldorf, 1. Auflage, 1994, bekannt. Systeme zur Regelung einer die Fahrdynamik eines Fahrzeuges beschreibenden Größe sind beispielsweise aus der in der Automobiltechnischen Zeitschrift (ATZ) 96, 1994, Heft 11, S. 674-689 erschienenen Veröffentlichung "FDR - Die Fahrdynamikregelung von Bosch", bekannt.

Die Aufgabe der vorliegenden Erfindung besteht darin, die Ermittlung einer den Bremskreisdruck beschreibenden Größe zu verbessern.

Diese Aufgabe wird durch die Merkmale des Anspruchs 1 bzw. durch die des Anspruchs 18 sowie durch die Merkmale des Anspruchs 15 bzw. durch die des Anspruchs 19 gelöst.

### Vorteile der Erfindung

In diesem Kapitel sei vorab auf das Kapitel Ausführungsbeispiel und auf die Zeichnung verwiesen. Insbesondere sei darauf hingewiesen, daß die dieser Anmeldung zugrundeliegende Bremsanlage für jeden Radbremszylinder erste Mittel enthält, die aus einem Einlaß- bzw. einem Auslaßventil bestehen, sowie wenigstens eine dem jeweiligen Bremskreis zugeordnete Speicherkammer. Ferner enthält die Bremsanlage für jeden Bremskreis zweite Mittel, mit denen ein fahrerunabhängiger Druckaufbau durchführbar ist. Diese Mittel bestehen wenigstens aus einer Pumpe, einem Vorlade- sowie einem Auslaßventil. An dieser Stelle sei vermerkt, daß es denkbar ist, für jede Pumpe einen zugehörigen Motor oder aber für beide Pumpen zusammen ein Motor vorzusehen. Insbesondere ist es auch denkbar, daß in diesem Zusammenhang eine Pumpe eingesetzt wird, die aus zwei Pumpenelementen und einem Motor besteht, wobei jedem Bremskreis ein Pumpenelement zugeordnet ist.

Der Vorteil des erfindungsgemäßen Verfahrens bzw. der erfindungsgemäßen Vorrichtung gegenüber dem eingangs genannten Stand der Technik bezüglich der Ermittlung einer den Bremskreisdruck repräsentierenden Größe bei einem fahrerunabhängigen Druckaufbau ist der, daß bei der Ermittlung der den Bremskreisdruck repräsentierenden Größe wenigstens das erfaßte Förderverhalten der Pumpe berücksichtigt wird. Dieses erfaßte Förderverhalten der Pumpe geht dabei in eine den Zustand des Bremskreises beschreibende Größe ein, wobei während eines fahrerunabhängigen Druckaufbaus die den Bremskreisdruck repräsentierende Größe wenigstens in Abhängigkeit der den Zustand des Bremskreises beschreibenden Größe ermittelt wird.

Vorteilhafterweise wird die dem Zustand des Bremskreises beschreibende Größe wenigstens in Abhängigkeit der im entsprechenden Bremskreis geöffneten Einlaßventile bzw. in Abhängigkeit des Wertes der den Bremskreisdruck repräsentierenden Größe ermittelt. Bei der Berücksichtigung der im entsprechenden Bremskreis geöffneten Einlaßventile wird zum einen nach Anzahl und zum anderen nach Art der geöffneten Einlaßventile unterschieden. Durch die Unterscheidung nach der Art, d.h. durch die Unterscheidung ob das Einlaßventil eines Vorderrades oder das Einlaßventil eines Hinterrades geöffnet ist, wird bei der Ermittlung der den Bremskreisdruck repräsentierenden Größe eine bessere Nachbildung des tatsächlich im Bremskreis vorherrschenden Druckes realisiert.

Durch die Berücksichtigung des Förderverhaltens der Pumpe während des fahrerunabhängigen Druckaufbaus wird ebenfalls eine bessere Nachbildung des tatsächlich im Bremskreis vorherrschenden Druckes durch die den Bremskreisdruck repräsentierende Größe erreicht. Zur Erfassung des Förderverhaltens der Pumpe während eines fahrerunabhängigen Druckaufbaus sind verschiedene Kriterien vorgesehen. Als ein Kriterium wird hierfür wenigstens berücksichtigt, ob sich die Pumpe in einer Anlaufphase befindet. Als ein weiteres Kriterium wird hierfür wenigstens eine sich aus dem Bremskreisdruck ergebende Abhängigkeit der Förderleistung der Pumpe berücksichtigt. Ferner wird als ein weiteres Kriterium hierfür wenigstens berücksichtigt, ob in einem weiteren Bremskreis der Bremsanlage ein fahrerunabhängiger Druckaufbau durchgeführt wird, während die Pumpe fördert. In Abhängigkeit wenigstens eines dieser Kriterien wird wenigstens ein Faktor ermittelt, mit dem die den Zustand des Bremskreises beschreibende Größe bewertet wird. Somit geht das Förderverhalten der Pumpe während eines fahrerunabhängigen Druckaufbaus in die den Zustand des Bremskreises beschreibende Größe mit ein.

Desweiteren hat es sich als vorteilhaft erwiesen, ausgehend von der den Zustand des Bremskreises beschreibenden Größe eine Größe zu ermitteln, die die zeitliche Änderung des Bremskreisdruckes beschreibt. Der aktuelle Wert für die den Bremskreisdruck repräsentierende Größe wird wenigstens in Abhängigkeit der die zeitliche Änderung des Bremskreisdrukkes beschreibenden Größe bzw. in Abhängigkeit eines vorhergehenden Wertes für die den Bremskreisdruck repräsentierende Größe ermittelt.

Bei der Ermittlung der die zeitliche Änderung des Bremskreisdruckes beschreibenden Größe wird ferner eine Größe berücksichtigt, die das über das Vorladeventil in den Bremskreis geförderte Volumen repräsentiert. Die das über das Vorladeventil in den Bremskreis geförderte Volumen repräsentierende Größe wird dabei vorteilhafterweise ausgehend von einer die Ansteuerzeit des Vorladeventils beschreibenden Größe ermittelt. Unter dem Begriff "gefördertes Volumen" wird das geförderte Volumen des Bremsmediums verstanden.

Ferner hat es sich als vorteilhaft erwiesen, bei der Ermittlung der Größe, die das über das Vorladeventil in den Bremskreis geförderte Volumen repräsentiert, das Volumen, des in einer Speicherkammer gespeicherten Bremsmediums, welches bei einem Druckabbau aus dem Radbremszylinder über das dem Radbremszylinder zugeordnete Auslaßventil der Speicherkammer zugeführt wird, mit zu berücksichtigen. Das in der Speicherkammer gespeicherte Bremsmedium wird dergestalt mitberücksichtigt, daß die die Ansteuerzeit des Vorladeventils beschreibende Größe in Abhängigkeit des Volumens des in der Speicherkammer gespeicherten Bremsmediums beeinflußt wird.

Ein weiterer Vorteil besteht darin, bei der Ermittlung der den Zustand des Bremskreises beschreibenden Größe ferner eine Größe mit zu berücksichtigen, die eine am Fahrzeug auftretende Querbeschleunigung repräsentiert. Aufgrund großer Querbeschleunigungen kann es in der Bremsanlage zu einem sogenannten Lüftspiel kommen, wodurch bei einem insbesondere fahrerunabhängigen Druckaufbau zunächst Bremsmedium in die Radbremszylinder gefördert wird, ohne daß dabei eine auf das entsprechende Rad wirkende Bremskraft erzeugt wird. Diesem Sachverhalt wird durch die Berücksichtigung der am Fahrzeug auftretenden Querbeschleunigung Rechnung getragen.

Durch die Beschränkung der Größe, die den Bremskreisdruck repräsentiert, auf einen minimalen bzw. auf einen maximalen Wert, ergibt sich ein weiterer Vorteil. Durch die Beschränkung auf einen minimalen bzw. auf einen maximalen Wert wird sichergestellt, daß die ermittelte Größe, die den Bremskreisdruck repräsentiert, in einem physikalisch sinnvollen Wertebereich liegt. Als minimaler Wert bietet sich vorteilhafter Weise der vom Fahrer eingestellte Druck an, der mit Hilfe eines Sensors erfaßbar ist. Als maximaler Wert für den Bremskreisdruck bietet sich eine Größe an, die das Druckverhalten des im Bremskreis enthaltenen Umschaltventils beschreibt.

Bei einem im Bremskreis stattfindenden Druckabbau ist es von Vorteil, die den Bremskreisdruck repräsentierende Größe wenigstens in Abhängigkeit einer Größe zu ermitteln, die den zu erwartenden Bremskreisdruck nach dem Druckabbau beschreibt. Ferner ist es hierbei von Vorteil, eine Größe zu berücksichtigen, die das zu erwartende Druckabnahmeverhalten beschreibt. Bei einem im Bremskreis stattfindenden Druckabbau wird die den Bremskreisdruck repräsentierende Größe mit Hilfe eines mathematischen Modells, welches insbesondere einen Tiefpaß beschreibt, ermittelt.

Weitere Vorteile sowie vorteilhafte Ausgestaltungen können den Unteransprüchen, der Zeichnung sowie der Beschreibung des Ausführungsbeispiels entnommen werden.

### Zeichnung

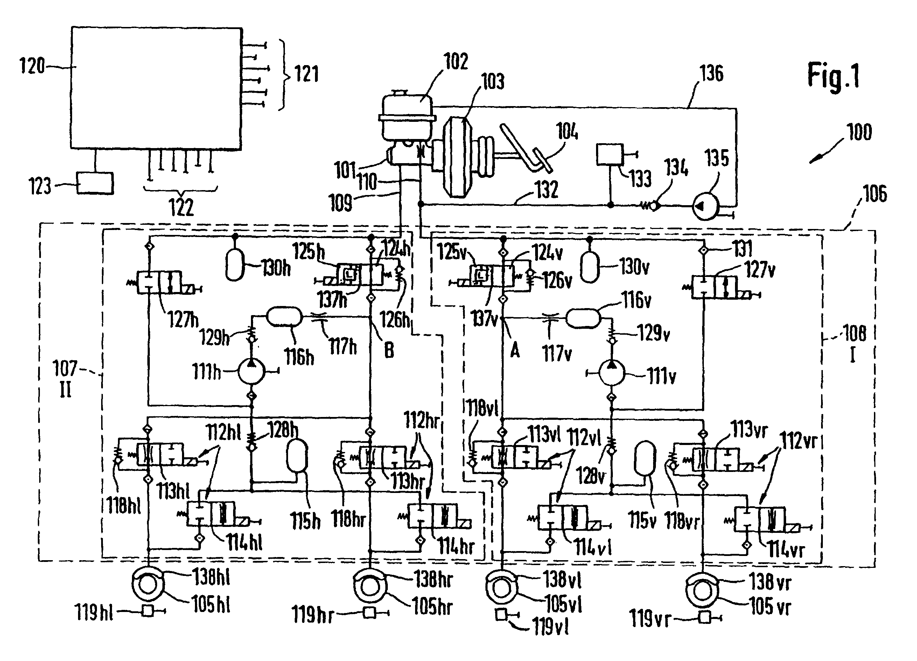

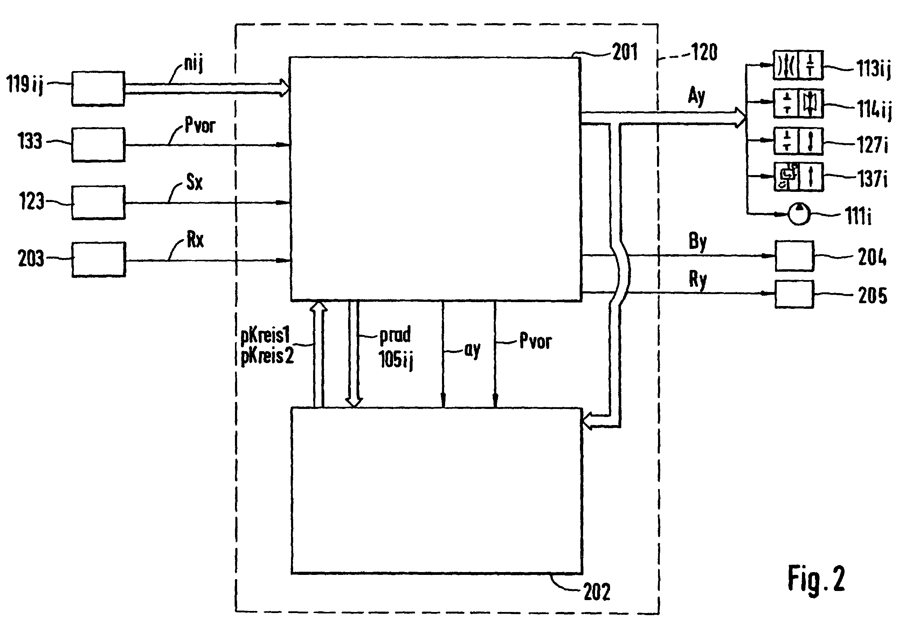

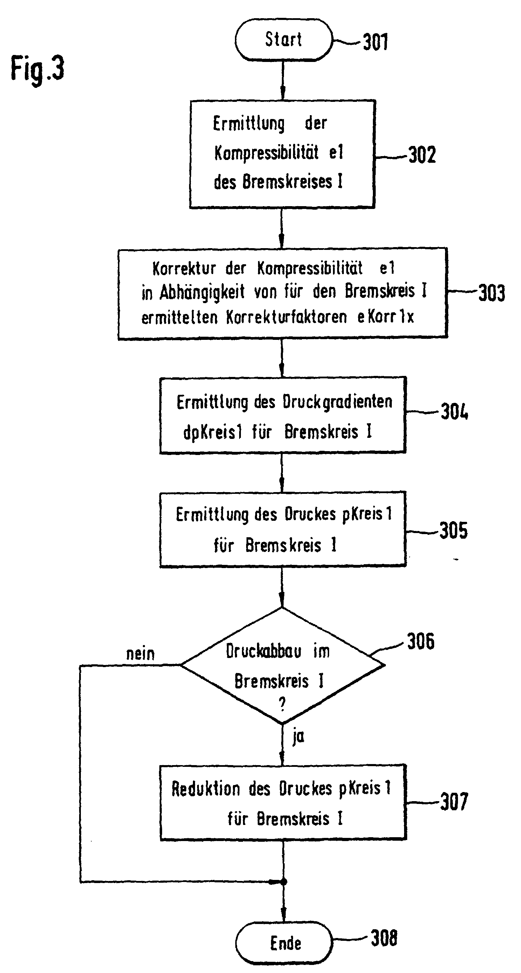

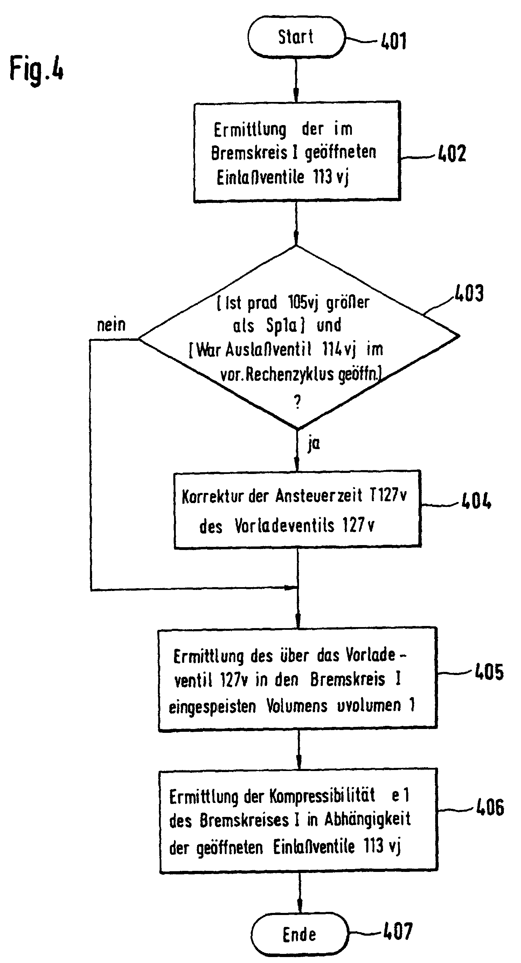

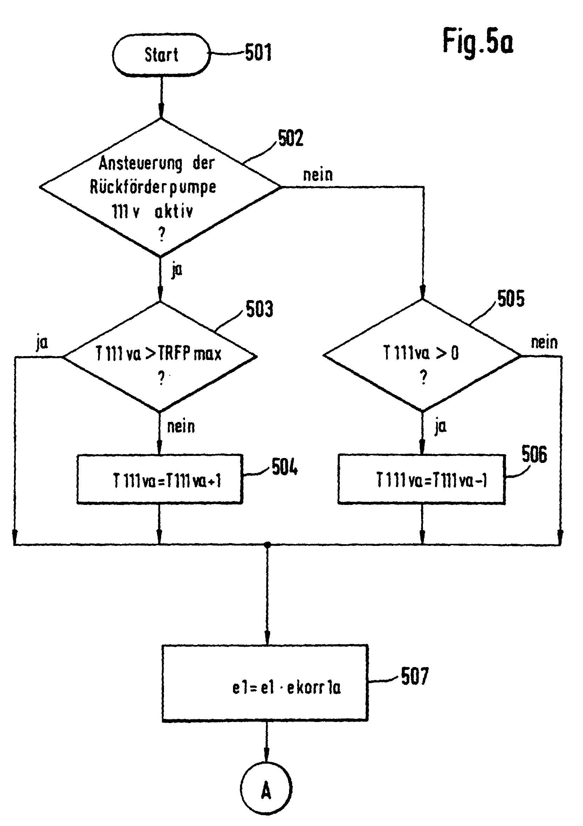

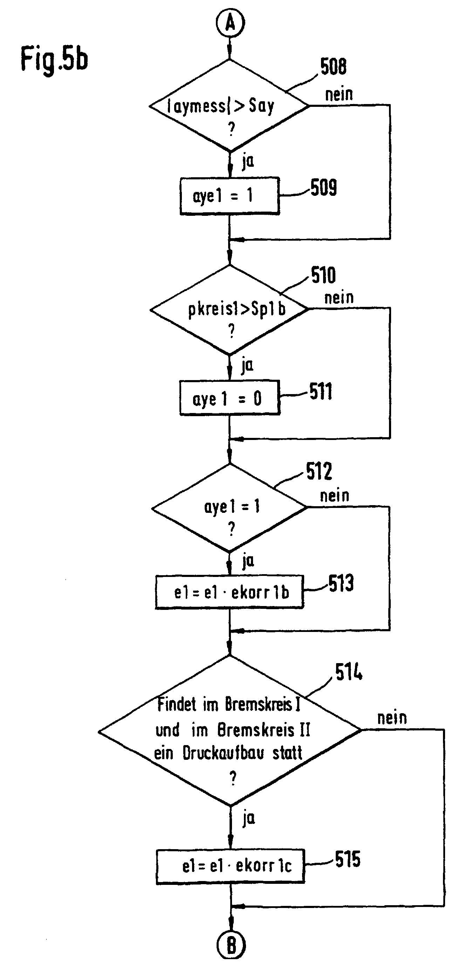

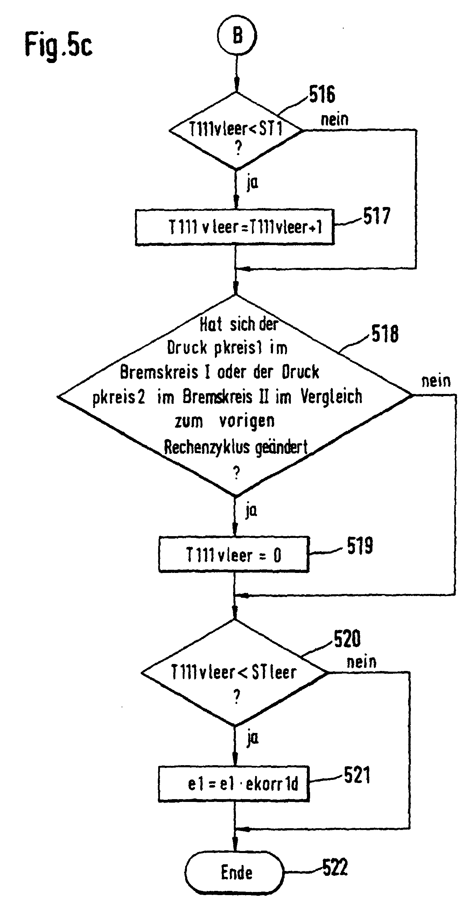

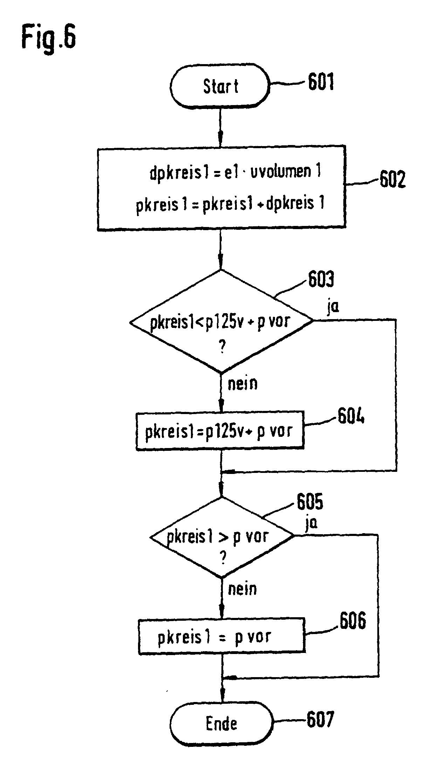

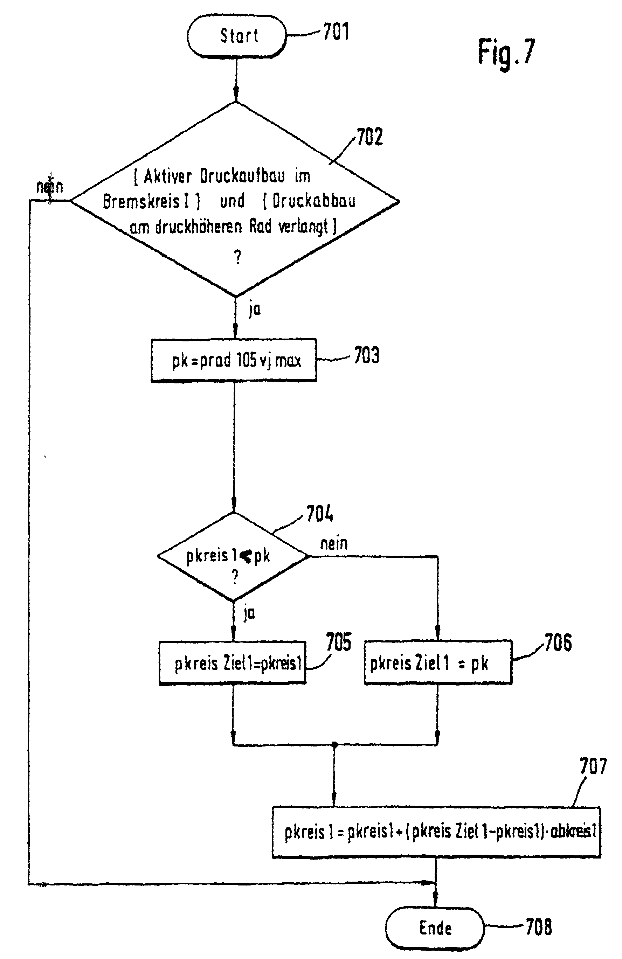

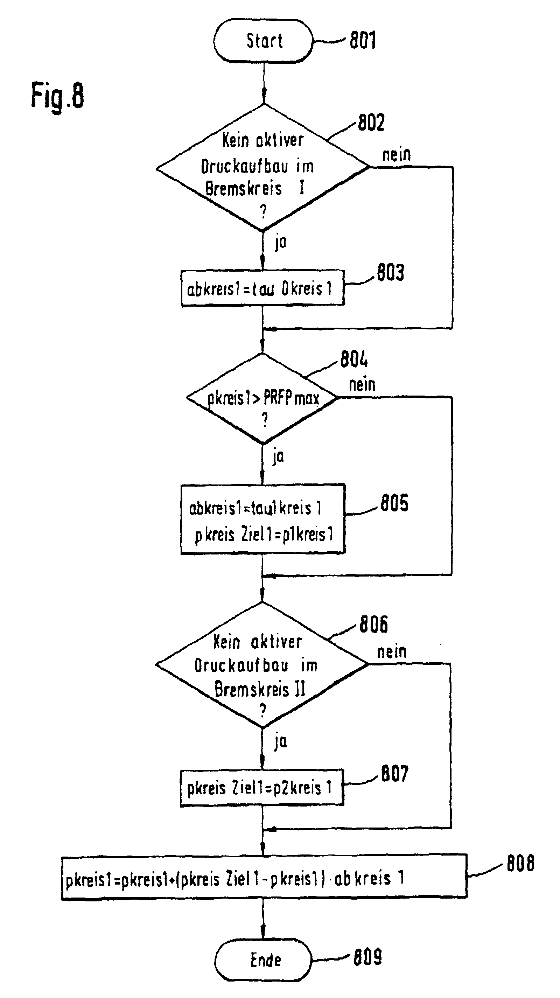

Die Zeichnung besteht aus den Figuren 1 bis 8. Figur 1 zeigt in einer Übersichtsdarstellung die erfindungsgemäße Bremsanlage. Dabei ist in Figur 1 der hydraulische Schaltplan sowie das zur Bremsanlage gehörende Steuergerät dargestellt. In Figur 2 ist das Steuergerät in detaillierterer Form dargestellt. Figur 3 zeigt die wesentlichen Schritte des erfindungsgemäßen Verfahrens zur Ermittlung der den Bremskreisdruck repräsentierenden Größe. In Figur 4 ist die Ermittlung der den Zustand des Bremskreises beschreibenden Größe dargestellt. Figur 5 (bestehend aus den Teilfiguren 5a, 5b und 5c) zeigt zum einen die Erfassung des Förderverhaltens der Pumpe während eines fahrerunabhängigen Druckaufbaus und die daraus resultierende Bewertung der den Zustand des Bremskreises beschreibenden Größe. Zum anderen zeigt Figur 5 die Berücksichtigung der am Fahrzeug auftretenden Querbeschleunigung bei der Ermittlung der den Zustand des Bremskreises beschreibenden Größe. In Figur 6 ist die Ermittlung des Wertes der den Bremskreisdruck repräsentierenden Größe dargestellt. Die Figuren 7 und 8 zeigen die Ermittlung der den Bremskreisdruck repräsentierenden Größe im Falle eines im Bremskreis stattfindenden Druckabbaus. Die Figuren 4 bis 6 beziehen sich auf einen fahrerunabhängig durchgeführten Druckaufbau.

Es sei darauf hingewiesen, daß Komponenten bzw. Blöcke mit derselben Bezeichnung in unterschiedlichen Figuren dieselbe Funktion haben.

### Ausführungsbeispiel

Dem Ausführungsbeispiel liegt eine in einem Fahrzeug enthaltene Bremsanlage 100, wie sie in Figur 1 dargestellt ist, zugrunde. Die Bremsanlage besitzt einen zweikreisigen Hauptbremszylinder 101 mit einem Vorratsbehälter 102, mit beispielsweise einem pneumatischen Bremskraftverstärker 103 und mit einem Bremspedal 104, sowie zwei Bremskreise 107 bzw. 108. Dem Bremskreis 107 sind die beiden Räder 105hl bzw. 105hr nebst zugehörigen Aktuatoren 138hl bzw. 138hr zugeordnet. Dem Bremskreis 108 sind die beiden Räder 105vl bzw. 105vr nebst zugehörigen Aktuatoren 138vl bzw. 138vr zugeordnet. Zwischen dem Hauptbremszylinder 101 und den Aktuatoren 138hl, 138hr, 138vl bzw. 138vr ist eine Radschlupfregeleinrichtung 106, welche auch als Hydroaggregat bezeichnet wird, angeordnet. Bei den Aktuatoren handelt es sich um aus dem Stand der Technik bekannte Radbremsen, die über ein in den zugehörigen Radbremszylinder einspeisbares Bremsmedium betätigbar sind.

Nachfolgend wird für die Räder des Fahrzeuges die vereinfachende Schreibweise 105ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, beispielsweise den Aktuatoren 138ij bzw. den in der Bremsanlage enthaltenen Ventilen bzw. Pumpen entsprechend.

Bei der in Figur 1 gezeigten Bremskreisaufteilung handelt es sich um eine sogenannte Schwarz/Weiß-Aufteilung. Diese Bremskreisaufteilung enthält einen ersten Bremskreis I, der mit 108 bezeichnet ist, und dem die Vorderräder 105vj des Fahrzeuges zugeordnet sind. Des weiteren enthält die Bremskreisaufteilung einen zweiten Bremskreis II, der mit 107 bezeichnet ist, und dem die Hinterräder 105hj des Fahrzeuges zugeordnet sind. Diese Bremskreisaufteilung soll keine Einschränkung darstellen. Es ist auch denkbar, das erfindungsgemäße Verfahren bzw. die erfindungsgemäße Vorrichtung in einer Bremsanlage mit anderer Bremskreisaufteilung einzusetzen.

Der Hauptbremszylinder 101 ist beispielsweise in an sich bekannter Weise aufgebaut und unter Zuhilfenahme des Bremspedals 104 betätigbar, so daß in den Bremskreisen 107 und 108 Bremsdrücke entstehen. Die mittels des Bremspedals 104 auf den Hauptbremszylinder 101 ausübbare Wirkung ist mittels des Bremskraftverstärkers 103 verstärkbar. Der Vorratsbehälter 102 versorgt den Hauptbremszylinder 101 mit Druckmittel, das vom Hauptbremszylinder 101 aus in Richtung zu den Aktuatoren 138ij durch das Hydroaggregat 106 hindurch drückbar ist für einen normalen Bremsbetrieb.

Das Hydroaggregat 106 ist für die Beeinflussung von Radschlupf bei Betätigung des Bremspedals 104 als sogenannter Rückfördertyp ausgebildet und besitzt für den Bremskreis 107 eine Rückförderpumpe 111h und für den Bremskreis 108 eine Rückförderpumpe 111v. Ferner besitzt das Hydroaggregat 106 für jeden der Aktuatoren 138ij eine eigene Bremsdruckmodulationsventilanordnung 112ij, beispielsweise bestehend aus jeweils einem Einlaßventil 113ij und einem jeweiligen Auslaßventil 114ij, sowie für jeden Bremskreis 107 bzw. 108 eine Speicherkammer 115i. Des weiteren sind beispielsweise eine erste Dämpferkammer 116h für den Bremskreis 107 und eine zweite Dämpferkammer 116v für den Bremskreis 108 sowie eine Dämpferdrossel 117h bzw. 117v vorgesehen. Der für den Antrieb der Rückförderpumpen 111i erforderliche Motor ist in Figur 1 nicht dargestellt. An dieser Stelle sei bemerkt, daß es auch denkbar ist, für jede der Rückförderpumpen 111i einen gesonderten Motor vorzusehen. Auch kann die bauliche Anordnung der Rückförderpumpen 111i verschieden realisiert sein. Zum einen ist es denkbar, beide Rückförderpumpen baulich getrennt voneinander anzuordnen. Zum anderen ist es denkbar, die Rückförderpumpen 111i baulich zusammenhängend anzuordnen, so daß dadurch im übertragenen Sinne eine aus zwei "Pumpenelementen" 111i bestehende Pumpe entsteht.

Ausgehend von den Aktuatoren 138ij sind deren jeweils zugeordnete Einlaßventile 113ij in Richtung zum Hauptbremszylinder 101 umgehbar mittels Rückschlagventilen 118ij, die in Richtung zum Hauptbremszylinder 101 hin öffenbar sind bei einem Druckgefälle über dem jeweiligen Einlaßventil 113ij, beispielsweise wenn dieses in seine Sperrstellung gesteuert ist oder wenn in seiner normalen Offenstellung eine zugeordnete Drossel wirksam ist.

Anläßlich einer Betätigung des Bremspedals 104 und deshalb den Aktuatoren 138ij zugeführtem Bremsdruck ist Radschlupfregelbetrieb möglich mittels der genannten Einzelelemente des Hydroaggregats 106. Hierzu befinden sich die Einlaßventile 113ij zwischen den jeweiligen Aktuatoren 138ij und dem Hauptbremszylinder 101 normalerweise in Offenstellung, so daß durch Betätigung des Bremspedals 104 im Hauptbremszylinder 101 erzeugter Druck normalerweise in die Aktuatoren 138ij gelangen kann. Die jeweils ebenfalls mit den Aktuatoren 138ij verbundene Auslaßventile 114ij der Bremsdruckmodulationsventilanordnungen 112ij sind in der Normalstellung geschlossen und ermöglichen in gesteuerter Stellung einen drosselnden Durchlaß und sind mit der Rückförderpumpe 111h des Bremskreises 107 eingangsseitig bzw. mit der Rückförderpumpe 111v des Bremskreises 108 eingangsseitig verbunden. Ausgangsseitig an die Rückförderpumpen 111i schließen sich die Dämpfer 116i an. In Richtung zum Hauptbremszylinder 101 sowie zu den jeweiligen Einlaßventilen 113i folgen auf die Dämpferkammern 116i die Drosseln 117i.

Zum Hydroaggregat 106 gehört noch ein Steuergerät 120 sowie den Rädern 105ij zugeordnete Raddrehzahlsensoren 119ij. Die mit Hilfe der Raddrehzahlsensoren 119ij erzeugten Signale nij werden dem Steuergerät 120 zugeführt. Dies ist in Figur 1 durch die von den Raddrehzahlsensoren 119ij abgehenden elektrischen Leitungen sowie durch die Anschlüsse 122 am Steuergerät, die die dem Steuergerät zugeführten Signale darstellen sollen, angedeutet. Weitere mit dem Steuergerät 120 in Verbindung stehende Sensoren sind durch den Block 123 angedeutet. An das Steuergerät 120 sind die bereits beschriebenen Pumpen bzw. Ventile sowie weitere die noch zu beschreibenden Pumpen bzw. Ventile angeschlossen. Dies ist durch die Anschlüsse 121, die die vom Steuergerät 120 abgehenden Ansteuersignale darstellen sollen, und durch die an den Ventilen bzw. Pumpen sich befindenden elektrischen Leitungen angedeutet.

Bei dem Steuergerät 120 kann es sich beispielsweise um solch eines handeln, welches für eine Regelung des Bremsschlupfes, bzw. für eine Regelung des Antriebsschlupfes, bzw. für eine Regelung einer die Fahrdynamik des Fahrzeuges beschreibenden Größe, insbesondere der Gierrate des Fahrzeuges, eingesetzt wird.

Wird beispielsweise im Steuergerät 120 für alle Räder ein anwachsender Bremsschlupf mit bevorstehender Radblockierneigung festgestellt, so schaltet das Steuergerät 120 die Rückförderpumpen 111i ein, schließt alle Einlaßventile 113ij und öffnet alle zugeordneten Auslaßventile 114ij. Dies hat zur Folge, daß im Hauptbremszylinder 101 gegebenenfalls noch ansteigender Druck nicht in die Aktuatoren 138ij gelangt, sondern daß aus diesen Aktuatoren 138ij Bremsmedium in die Speicherkammern 115i abströmen kann, mit der Folge der Verminderung bzw. Beseitigung der Radblockiergefahr. Aus den Speicherkammern 115i fließt dann das Bremsmedium in die Rückförderpumpen 111i ein. Infolgedessen drücken diese Rückförderpumpen 111i das Bremsmedium durch die Dämpferkammern 116i und die Drosseln 117i über die beiden Umschaltventile 137i zurück zum Hauptbremszylinder 101. Folglich wird durch die Rückförderpumpe 111i der im Radbremszylinder vorliegende Druck abgebaut. Nach Beenden der Radblockiergefahr, es sei hier angenommen, daß die Radblockiergefahr an allen Rädern 105ij gleichzeitig verschwindet, werden die Bremsdruckmodulationsventilanordnungen 112ij in ihre Grundstellungen gebracht, indem das Steuergerät 120 die Zufuhr von für das Bremsdruckabsenken notwendigen Steuerströmen beendet. Ebenfalls beendet das Steuergerät 120 auch die Stromzufuhr für die beiden Rückförderpumpen 111i.

Beispielsweise ist das Steuergerät 120 auch so eingerichtet, daß bei unterschiedlicher Radblockiergefahr an den Rädern Drücke in den Aktuatoren 138ij individuell und unabhängig voneinander veränderbar sind.

Zum automatischen Bremsen besitzt das Hydroaggregat 106 noch Umschaltventile 137i, die in einer ersten Stellung als Durchlaßventil 124i und in einer zweiten Stellung als Druckbegrenzungsventil 125i fungieren. Parallel zu diesen Umschaltventilen 137i sind Rückschlagventile 126i angeordnet. Durch die Rückschlagventile 126i wird sichergestellt, daß der vom Fahrer eingestellte Vordruck Pvor zur Verfügung gestellt wird. Desweiteren sind den Rückförderpumpen 111i eingangsseitig noch Vorladeventile 127i sowie Rückschlagventile 128i zugeordnet. Ausgangsseitig stehen die Rückförderpumpen jeweils mit einem weiteren Rückschlagventil 129i in Verbindung. Zwischen den Anschlüssen der Umschaltventile 137i sowie den Vorladeventilen 127i, die dem Hauptbremszylinder 101 zugewandt sind, sind jeweils Dämpferkammern 130i vorgesehen. Zur Versorgung des Hydroaggregats 106 für automatischen Bremsbetrieb ist wenigstens ein Pumpenaggregat 135, insbesondere eine Vorladepumpe, vorgesehen, welches dem Bremskreis 108 zugeordnet ist. Zu diesem Zweck verläuft von dem Pumpenaggregat 135 zu einer Hauptbremsleitung 110, die sich zwischen dem Hauptbremszylinder 101 und dem Hydroaggregat 106 befindet, eine Einspeiseleitung 132, in die ein zur Hauptbremsleitung 110 hin öffenbares Rückschlagventil 134 eingebaut ist. Das Pumpenaggregat 135 ist mittels einer Saugleitung 136 an den Vorratsbehälter 102 angeschlossen. Zwischen dem Rückschlagventil 134 und der Hauptbremsleitung 110 ist ein Sensor 133 vorgesehen, der ein Signal erzeugt, welches den vom Fahrer eingestellten Vordruck Pvor repräsentiert.

Der zweite Bremskreis 107 ist über eine ihm zugeordnete Hauptbremsleitung 109, die sich ebenfalls zwischen dem Hauptbremszylinder 101 und dem Hydroaggregat 106 befindet, an den Hauptbremszylinder 101 angeschlossen.

Erkennt das Steuergerät 120 beispielsweise, daß automatisches Bremsen, d.h. ein fahrerunabhängiger Druckaufbau an wenigstens einem der Vorderräder 105vj erforderlich ist, so schaltet das Steuergerät 120 das Pumpenaggregat 135 ein, so daß dieses durch das gleichzeitig von dem Steuergerät 120 elektrisch geöffneten Vorladeventil 127v hindurch die Rückförderpumpe 111v mit Bremsmedium versorgt, so daß diese bei einer Umschaltung des Umschaltventils 137v auf den Betrieb als Druckbegrenzungsventil 125v Druck für den wenigstens einen Aktuator 138vj zur Verfügung stellt. Durch das Druckbegrenzungsventil 125v wird ein zu starker Druckanstieg im Bremskreis 108 vermieden.

Entsprechend wird verfahren, wenn bezüglich der Hinterräder 105hj ein fahrerunabhängiger Druckaufbau erforderlich ist, allerdings steht hier ein dem Pumpenaggregat 135 entsprechendes Mittel nicht zur Verfügung. Über eine Verschiebung des Schwimmkolbens im Hauptbremszylinder 101 wird auch in diesem Bremskreis die Rückförderpumpe 111h mit Bremsmedium versorgt.

Die im Zusammenhang mit dem automatischen Bremsen beschriebene Vorgehensweise entspricht der, die in einem Antriebsschlupf-Regelfall zur Vermeidung des Durchdrehens der angetriebenen Räder durchgeführt wird.

Neben den bereits beschriebenen Komponenten enthält das Hydroaggregat an verschiedenen Stellen mit 131 bezeichnete Filter, auf die hier nicht näher eingegangen wird.

Abschließend sei zu Figur 1 bemerkt, daß die in ihr offenbarte Schwarz/Weiß-Aufteilung der Bremsanlage keine Einschränkung darstellen soll, denkbar wäre beispielsweise auch eine Diagonalaufteilung der Bremsanlage. Ferner ist auch denkbar, die beschriebene Funktion der Bremsanlage auch unter Verwendung anderer Komponenten zu realisieren. Außerdem soll die Darstellung einer hydraulischen Bremsanlage keine Einschränkung darstellen. Der Einsatz des erfindungsgemäßen Verfahrens bzw. der erfindungsgemäßen Vorrichtung wäre auch im Zusammenhang mit einer pneumatischen Bremsanlage denkbar.

Mit dem erfindungsgemäßen Verfahren bzw. mit der erfindungsgemäßen Vorrichtung ist für den Bremskreis 108 der beispielsweise an der Stelle A vorherrschende Bremskreisdruck ermittelbar, sowie für den Bremskreis 107 der beispielsweise an der Stelle B vorherrschende Bremskreisdruck ermittelbar.

Der bereits erwähnte fahrerunabhängig durchgeführte Druckaufbau wird als aktiver bzw. teilaktiver Druckaufbau realisiert; in beiden Fällen ist der Bremskreisdruck größer als der vom Fahrer eingestellte Bremsdruck Pvor.

In Figur 2 ist der für das erfindungsgemäße Verfahren bzw. der für die erfindungsgemäße Vorrichtung wesentliche Aufbau des Steuergerätes 120 dargestellt. Das Steuergerät 120 weist einen Block 201 auf, der den Reglerkern des im Fahrzeug implementierten Schlupfregelsystems darstellt. Diesem Reglerkern 201 werden die mit den Raddrehzahlsensoren 119ij ermittelten Raddrehzahlen nij zugeführt. Ferner erhält der Reglerkern 201 das mit Hilfe des Sensors 133 ermittelte Signal Pvor, welches den vom Fahrer eingestellten Bremsdruck repräsentiert. Wie bereits in Figur 1 angedeutet, werden dem Reglerkern 201 weitere Signale Sx zugeführt, die von weiteren im Fahrzeug vorhandenen Sensoren, die mit dem Block 123 angedeutet sind, erzeugt werden. Zu diesen weiteren Sensoren soll wenigstens ein Sensor gehören, der die am Fahrzeug angreifende Querbeschleunigung erfaßt. Sofern es sich bei dem im Fahrzeug implementierten Regelungssystem um ein System zur Regelung einer die Fahrzeugdynamik beschreibenden Größe, insbesondere der Gierrate, handelt, stellt der Block 123 wenigstens einen Lenkwinkelsensor, einen Gierratensensor bzw. den bereits erwähnten Querbeschleunigungssensor, dar.

Ferner sind in dem Block 203 weitere im Fahrzeug enthaltene Regelungssysteme bzw. Regler dargestellt. Die mit diesen Regelungssystemen bzw. Reglern erzeugten Signale Rx werden ebenfalls dem Reglerkern 201 zugeführt. Die Signale nij, Pvor, Sx bzw. Rx sind in Figur 1 mit 122 bezeichnet.

Desweiteren weist das Steuergerät 120 einen Block 202 auf, in dem für den Bremskreis 108 die den Bremskreisdruck repräsentierende Größe pkreis1 und für den Bremskreis 107 die den Bremskreisdruck repräsentierende Größe pkreis2 ermittelt wird. Sowohl der Wert für den Bremskreisdruck pkreis1 als auch der Wert für den Bremskreisdruck pkreis2 werden ausgehend vom Block 202 dem Block 201 zugeführt. Zur Ermittlung der Bremskreisdrücke pkreis1 bzw. pkreis2 werden dem Block 202 ausgehend vom Reglerkern 201 wenigstens die Werte prad105ij, die den im jeweiligen Radbremszylinder vorherrschenden Druck beschreiben, zugeführt. Ferner erhält der Block 202 ausgehend vom Reglerkern 201 ein die am Fahrzeug angreifende Querbeschleunigung beschreibendes Signal ay, ein den vom Fahrer eingestellten Druck beschreibendes Signal Pvor sowie die Ansteuersignale Ay, mit denen die in der Bremsanlage befindlichen Ventile bzw. Pumpen angesteuert werden. In Abhängigkeit des im Fahrzeug implementierten Schlupfregelsystems generiert der Reglerkern 201 in Abhängigkeit der ihm zugeführten Eingangssignale die Ansteuersignale Ay, mit denen wenigstens die in der Bremsanlage enthaltenen Einlaßventile 113ij, Auslaßventile 114ij, Vorladeventile 127i, Umschaltventile 137i sowie die Rückförderpumpen 111i angesteuert werden. Ferner generiert der Reglerkern 201 weitere Ansteuersignale By, mit denen beispielsweise das in der Bremsanlage enthaltene Pumpenaggregat 135 sowie weitere im Fahrzeug angeordnete Komponenten, die im Block 204 zusammengefaßt sind, angesteuert werden. Außerdem erzeugt der Reglerkern 201 Signale Ry, die den weiteren im Fahrzeug enthaltenen und mit dem Block 205 angedeuteten Reglern zugeführt werden. Die Blöcke 203 bzw. 205 können entweder dieselben oder unterschiedliche Regler enthalten.

In Figur 3 ist mit Hilfe eines Flußdiagrammes das in der erfindungsgemäßen Vorrichtung ablaufende erfindungsgemäße Verfahren zur Ermittlung des Bremskreisdruckes im Bremskreis 108 dargestellt. Im weiteren Verlauf wird der Bremskreis 108 mit I bezeichnet. Die Auswahl des Bremskreises 108 bzw. I zur Beschreibung der erfindungsgemäßen Vorrichtung bzw. zur Beschreibung des erfindungsgemäßen Verfahrens soll keine Einschränkung darstellen. Die Ermittlung des Bremskreisdruckes im Bremskreis 107, d.h. im Bremskreis II kann in gleicher Weise wie die für den Bremskreis I erfolgen.

Die Ermittlung des Bremskreisdruckes pkreis1 im Bremskreis I startet mit dem Schritt 301. Dabei ist vorausgesetzt, daß ein fahrerunabhängig durchgeführter Druckaufbau vorliegt, wie er im Zusammenhang mit Figur 1 beschrieben wurde, d.h. daß die Rückförderpumpe 111v Bremsmedium fördert. Bei einem fahrerunabhängig durchgeführten Druckaufbau, der durch einen aktiven bzw. teilaktiven Bremseneingriff realisiert wird, kann nicht wie beim passiven Bremseneingriff d.h. bei einem Bremseneingriff, bei dem der in den Radbremszylindern realisierte Druck direkt vom Fahrer über das Bremspedal vorgegeben wird, von dem durch den Fahrer vorgegebenen Bremsdruck Pvor auf den Bremskreisdruck geschlossen werden. Im Normalfall entspricht bei einem passiven Bremseneingriff der im Bremskreis vorherrschende Druck dem vom Fahrer vorgegebenen Bremsdruck Pvor. Bei einem fahrerunabhängig durchgeführten Druckaufbau, gilt dieser Zusammenhang nicht mehr, da in diesem Fall der Bremskreis durch das Umschaltventil 137v vom Hauptbremszylinder 101 abgetrennt ist, und insofern Information über den vom Fahrer eingestellten Bremsdruck Pvor nicht mehr verfügbar ist.

Im Anschluß an den Schritt 301 wird der Schritt 302 durchgeführt. Im Schritt 302 wird eine den Zustand des Bremskreises I beschreibende Größe ermittelt. Bei dieser den Zustand des Bremskreises I beschreibenden Größe handelt es sich beispielsweise um die Kompressibilität e1 des Bremskreises I. Die Kompressibilität e1 beschreibt für den Bremskreis I den Zusammenhang zwischen der Druckänderung im Bremskreis I und der im Bremskreis I stattfindenden Volumenänderung. An den Schritt 302 schließt sich der Schritt 303 an. Im Schritt 303 wird eine Korrektur der Kompressibilität e1 des Bremskreises I in Abhängigkeit von für den Bremskreis I ermittelten Korrekturfaktoren ekorr1x durchgeführt. In die Ermittlung der Korrekturfaktoren geht, wie weiter unten noch beschrieben wird, beispielsweise das Förderverhalten der Rückförderpumpe 111v während eines fahrerunabhängig durchgeführten Druckaufbaus ein. Im Anschluß an den Schritt 303 wird der Schritt 304 ausgeführt. Im Schritt 304 wird für den Bremskreis I ein Druckgradient dpkreis1 ermittelt, der den Anstieg des Bremskreisdruckes pkreis1 während eines fahrerunabhängig durchgeführten Druckaufbaus beschreibt. Nach dem Schritt 304 wird der Schritt 305 ausgeführt. In diesem Schritt wird der Druck pkreis1 für den Bremskreis I ermittelt. Im Anschluß an den Schritt 305 wird eine Abfrage im Schritt 306 ausgeführt. Durch diese Abfrage wird im Schritt 306 festgestellt, ob im Bremskreis I ein Druckabbau stattfindet. Findet im Bremskreis I ein Druckabbau statt, so wird als nächstes der Schritt 307 ausgeführt. In diesem Schritt wird für den Bremskreis I die den Bremskreisdruck beschreibende Größe pkreis1 reduziert. Im Anschluß an den Schritt 307 wird der Schritt 308 ausgeführt, mit dem das erfindungsgemäße Verfahren beendet wird. Wird im Schritt 306 dagegen festgestellt, daß im Bremskreis I kein Druckabbau stattfindet, so wird direkt im Anschluß an den Schritt 306 der Schritt 308 ausgeführt.

An dieser Stelle sei darauf hingewiesen, daß das in Figur 3 beschriebene erfindungsgemäße Verfahren permanent im Hintergrund des im Fahrzeug implementierten Regelungssystems abläuft. Dies bedeutet, daß im Normalfall im Anschluß an den Schritt 308 wieder der Schritt 301 ausgeführt wird.

Mit Hilfe des in Figur 4 dargestellten Flußdiagrammes wird die im Schritt 302 stattfindende Ermittlung der Kompressibilität e1 für den Bremskreis I näher beschrieben. Ferner zeigt Figur 4 die Ermittlung des über das Vorladeventil 127v in den Bremskreis I eingespeiste Volumen des Bremsmediums. Die Ermittlung der Kompressibilität e1 startet mit einem Schritt 401. Im Anschluß an den Schritt 401 werden die im Bremskreis I geöffneten Einlaßventile 113vj ermittelt. Die geöffneten Einlaßventile 113vj können anhand der vom Reglerkern 201 ausgegebenen Ansteuersignale Ay ermittelt werden. Die Ermittlung der geöffneten Einlaßventile 113vj ergibt allgemein zum einen die Anzahl und zum anderen die Art der geöffneten Einlaßventile im Bremskreis I. D.h. zum einen erhält man eine Information darüber, ob im Bremskreis I kein Einlaßventil bzw. ein Einlaßventil bzw. beide Einlaßventile geöffnet sind. Zum anderen erhält man eine Information darüber, ob das Einlaßventil eines Vorderrades bzw. das Einlaßventil eines Hinterrades geöffnet ist. Die Information über Anzahl bzw. Art der geöffneten Einlaßventile 113vj ist deshalb von Bedeutung, da sich die Kompressibilität e1 in Abhängigkeit der Anzahl bzw. der Art der geöffneten Einlaßventile unterschiedlich verhält. Der Einfluß der Anzahl der geöffneten Einlaßventile 113vj auf die Kompressibilität e1 ist dergestalt, daß je weniger Einlaßventile geöffnet sind, die Kompressibilität e1 um so größer ist. Die Ermittlung der Art der geöffneten Einlaßventile 113vj ist im Zusammenhang mit der offenbarten Schwarz/Weiß-Aufteilung der Bremsanlage 100 nicht von Bedeutung, da bei der Ermittlung der Kompressibilität e1 für den Bremskreis I bzw. bei der Ermittlung der Kompressibilität e2 für den Bremskreis II bei dieser Bremskreisaufteilung schon bekannt ist, daß der Bremskreis I ausschließlich Vorderräder und der Bremskreis II ausschließlich Hinterräder aufweist. Insofern wäre für die offenbarte Bremskreisaufteilung die Ermittlung der Anzahl der geöffneten Einlaßventile 113vj ausreichend, da die Art der Einlaßventile 113vj vorab bekannt ist. Die Ermittlung der Art der geöffneten Einlaßventile 113vj ist beispielsweise bei einer sogenannten Diagonalaufteilung der Bremskreise von Bedeutung. Ist allein ein Einlaßventil eines Vorderrades geöffnet, so nimmt die Kompressibilität kleinere Werte an, als wenn allein ein Einlaßventil eines Hinterrades geöffnet ist. Dies hängt damit zusammen, daß der Radbremszylinder eines Vorderrades üblicherweise ein größeres Volumen aufnehmen kann.

Im Anschluß an den Schritt 402 wird im Schritt 403 eine Abfrage ausgeführt. In der im Schritt 403 stattfindenden Abfrage wird für die Räder 105vj ermittelt, ob der Druck prad105vj in den zugehörigen Radbremszylindern jeweils größer als ein Schwellwert Spla ist. Gleichzeitig wird für die Räder 105vj ermittelt, ob das zugehörige Auslaßventil 114vj im vorigen Rechenzyklus geöffnet war. Mit der ersten Abfrage wird festgestellt, ob sich in dem zum Rad 105vj gehörenden Radbremszylinder überhaupt Bremsmedium befindet. Mit der zweiten Abfrage wird ermittelt, ob sich aufgrund der im vorigen geöffnet gewesenen Auslaßventile 114vj Bremsmedium in der Speicherkammer 115v befindet. Sind im Schritt 403 gleichzeitig beide Abfragen erfüllt, so wird als nächstes der Schritt 404 ausgeführt. Sind dagegen im Schritt 403 beide Abfragen nicht gleichzeitig erfüllt, so wird als nächstes der Schritt 405 ausgeführt.

Im Schritt 404 wird zunächst ausgehend von den Ansteuersignalen Ay die Ansteuerzeit T127v des Vorladeventils 127v ermittelt. Da im Schritt 403 beide Abfragen gleichzeitig erfüllt waren, kann davon ausgegangen werden, daß sich in der Speicherkammer 115 Bremsmedium befindet. Dieses Bremsmedium wird zusätzlich zu dem über das Vorladeventil 127v in den Bremskreis I eingespeisten Volumen mit in den Bremskreis 1 eingespeist. Um das in der Speicherkammer 115v befindliche Bremsmedium bei der Ermittlung des Druckes pkreis1 für den Bremskreis I mit zu berücksichtigen, wird im Schritt 404 eine Korrektur der Ansteuerzeit T127v des Vorladeventils 127v durchgeführt. Die Ansteuerzeit T127v wird dabei in Abhängigkeit des Volumens des in der Speicherkammer 115 befindlichen Bremsmediums dergestalt korrigiert, daß die Ansteuerzeit T127v mit zunehmendem Volumen zunehmend verlängert wird. Bei der Korrektur der Ansteuerzeit T127v wird das Volumen des in der Speicherkammer 115v befindlichen Bremsmediums nicht direkt ermittelt, sondern es wird als Maß für das Volumen der im Radbremszylinder des Rades 105vj herrschende Druck prad105vj berücksichtigt.

Im Anschluß an den Schritt 404 wird der Schritt 405 ausgeführt. In diesem Schritt wird das über das Vorladeventil 127v in den Bremskreis I eingespeiste Volumen uvolumen1 ermittelt. Das in dem Bremskreis I eingespeiste Volumen uvolumenl ergibt sich beispielsweise aus der korrigierten Ansteuerzeit T127v des Vorladeventils 127v und der auf eine Zeiteinheit bezogenen Förderleistung der Rückförderpumpe 111v. Dabei ist es empfehlenswert, den Wert des in den Bremskreis 1 eingespeisten Volumens uvolumen1 auf einen Wert zu begrenzen, der durch die Konstruktion der Rückförderpumpe 111v vorgegeben ist. Auf den Schritt 405 folgt der Schritt 406. Im Schritt 406 wird für den Bremskreis I die Kompressibilität e1 in Abhängigkeit der geöffneten Einlaßventile 113vj und in Abhängigkeit des momentanen Wertes des Bremskreisdruckes pkreis1 für den Bremskreis I ermittelt. Wie bereits im Zusammenhang mit Schritt 402 angedeutet, wird hierbei sowohl die Anzahl als auch die Art der geöffneten Einlaßventile 113vj berücksichtigt. Die Ermittlung der Kompressibilität e1 wird durch den Schritt 407 beendet, der sich an den Schritt 406 anschließt.

In Figur 5 ist mit Hilfe eines Flußdiagrammes die im Schritt 303 stattfindende Korrektur der Kompressibilität e1 für den Bremskreis I ausführlicher dargestellt.

Bei der Korrektur der Kompressibilität e1 werden im wesentlichen zwei Dinge berücksichtigt. Zum einen wird das erfaßte Förderverhalten der Rückförderpumpe 111v während des fahrerunabhängigen Druckaufbaus und zum anderen eine am Fahrzeug auftretenden Querbeschleunigung mit berücksichtigt.

Das Förderverhalten der Rückförderpumpe 111v wird aus folgendem Grund mit berücksichtigt: Wie im Schritt 405 gezeigt, wird das über das Vorladeventil 127v in den Bremskreis I eingespeiste Volumen uvolumen1 ermittelt. Wie noch gezeigt wird, geht dieses Volumen in die Ermittlung des Bremskreises pkreis1 ein. Das über das Vorladeventil 127v in den Bremskreis I eingespeiste Volumen uvolumen1 hängt in starkem Maße vom Förderverhalten der Rückförderpumpe 111v während des fahrerunabhängigen Druckaufbaus ab. Im Normalfall wird vorausgesetzt, daß die Rückförderpumpe 111v eine konstante Förderleistung aufweist, die nur in wenigen Situationen um einen konstanten und bekannten Faktor reduziert ist. Der Faktor kann aber auch nicht vorab bekannt sein, bzw. kann auch variabel sein. Um das tatsächliche Förderverhalten der Rückförderpumpe 111v genauer nachzubilden und somit die Ermittlung des Bremskreisdruckes pkreis1 zu verbessern, werden diese Situationen erfaßt und die Abweichung des Förderverhaltens der Rückförderpumpe 111v während des fahrerunabhängigen Druckaufbaus von dem idealerweise angenommenen konstanten Förderverhalten durch die Korrektur der Kompressibilität e1 berücksichtigt.

Der nachfolgend im Zusammenhang mit der Rückförderpumpe 111v verwendete Begriff "Hochlaufen" ist so zu verstehen, daß bei einer hochlaufenden Pumpe Drehzahl und Förderleistung solange steigen, bis die Pumpe die sie charakterisierende Förderleistung erreicht hat, d.h. bis die Pumpe hochgelaufen ist.

Die am Fahrzeug auftretende Querbeschleunigung wird aus folgendem Grund berücksichtigt: Bei großen Querbeschleunigungen kann es vorkommen, daß die Kolben der Radbremszylinder in diese hineingedrückt werden. Um die Kolben aus dem Radbremszylinder wieder herauszubringen, muß die Rückförderpumpe 111v Bremsmedium in die Radbremszylinder pressen, welches somit für eine Druckerhöhung im Bremskreis I nicht zur Verfügung steht. Diese Beeinflussung des Bremskreisdruckes pkreis1 im Bremskreis I wird durch eine Korrektur der Kompressibilität e1 in Abhängigkeit der am Fahrzeug auftretenden Querbeschleunigung berücksichtigt.

Die Korrektur der Kompressibilität e1 startet mit einem Schritt 501. Nachfolgend wird die im Schritt 502 stattfindende Abfrage ausgeführt. Durch die im Schritt 502 stattfindende Abfrage wird ermittelt, ob die Ansteuerung der Rückförderpumpe 111v aktiv ist. Diese Abfrage kann beispielsweise durch Auswertung der vom Reglerkern 201 generierten Ansteuersignale Ay durchgeführt werden. Wird im Schritt 502 ermittelt, daß die Ansteuerung der Rückförderpumpe 111v aktiv ist, so wird als nächstes der Schritt 503 ausgeführt. Im Schritt 503 wird ein Zähler T111va, der die Zeitdauer repräsentiert, während der die Rückförderpumpe 111v schon angesteuert wird, mit einem Begrenzungswert TRFPmax, der die Zeitdauer beschreibt, ab der angenommen werden kann, daß die Rückförderpumpe 111v hochgelaufen ist, verglichen. Ergibt sich im Schritt 503, daß der Zähler T111va kleiner ist als der Begrenzungswert TRFPmax, was gleichbedeutend damit ist, daß die Rückförderpumpe 111v noch nicht hochgelaufen ist, so wird als nächstes der Schritt 504 ausgeführt, in dem der Zähler T111va um 1 erhöht wird. Im Anschluß an den Schritt 504 wird der Schritt 507 ausgeführt. Ergibt sich dagegen im Schritt 503, daß der Zähler T111va größer ist als der Begrenzungswert TRFPmax, was gleich bedeutend damit ist, daß die Rückförderpumpe 111v hochgelaufen ist, so wird nach dem Schritt 503 der Schritt 507 ausgeführt.

Wird dagegen im Schritt 502 festgestellt, daß die Ansteuerung der Rückförderpumpe 111v nicht aktiv ist, so wird als nächstes der Schritt 505 ausgeführt. Im Schritt 505 wird der Zähler T111va mit dem Wert 0 verglichen. Durch diese Abfrage wird ermittelt, ob die Rückförderpumpe 111v noch läuft, obwohl sie nicht mehr angesteuert wird. Wird im Schritt 505 festgestellt, daß der Zähler T111va größer ist als 0, was gleichbedeutend damit ist, daß die Rückförderpumpe 111v noch läuft, so wird als nächstes der Schritt 506 ausgeführt, in dem der Zähler T111va um 1 verringert wird. Im Anschluß an den Schritt 506 wird der Schritt 507 ausgeführt. Wird dagegen im Schritt 505 festgestellt, daß der Zähler T111va nicht größer ist als 0, was gleichbedeutend damit ist, daß die Rückförderpumpe 111v nicht mehr läuft, so wird nach dem Schritt 505 der Schritt 507 ausgeführt.

Im Schritt 507 wird zunächst in Abhängigkeit des Zählers T111va und des Begrenzungswertes TRFPmax ein Korrekturwert eKorr1a für die Kompressibilität e1 ermittelt. In Abhängigkeit des im Schritt 406 ermittelten Wertes für die Kompressibilität e1 und des Korrekturwertes eKorr1a wird im Schritt 507 ein korrigierter Wert für die Kompressibilität e1 ermittelt. Der korrigierte Wert der Kompressibilität e1 ergibt sich beispielsweise durch Multiplikation des Wertes der Kompressibilität e1, der im Schritt 406 ermittelt wurde und dem Korrekturfaktor eKorr1a. Der Korrekturfaktor eKorr1a kann dabei beispielsweise wie folgt ermittelt werden: Wird im Schritt 505 festgestellt, daß der Zähler T111va nicht größer als 0 ist, so wird dem Korrekturfaktor ekorr1a der Wert 0 zugewiesen. Wird im Schritt 503 festgestellt, daß der Zähler T111va größer ist als der Begrenzungswert TRFPmax, so wird dem Korrekturfaktor eKorr1a der Wert 1 zugewiesen. Für Werte des Zählers T111va zwischen 0 bzw. TRFPmax wird dem Korrekturfaktor eKorr1a ein entsprechend zwischen 0 und 1 liegender Wert zugewiesen. Durch diese Wertzuweisung für den Korrekturfaktor eKorr1a erreicht man, daß je länger die Rückförderpumpe 111v läuft, die Kompressibilität e1 um so größer ist. Läuft die Rückförderpumpe 111v nicht (T111va ist nicht größer 0), so wird die Kompressibilität e1 zu 0 korrigiert, da die Rückförderpumpe 111v kein Bremsmedium fördert. Ist die Rückförderpumpe 111v hochgelaufen (T111va ist größer als der Begrenzungswert TRFPmax) so wird die Kompressibilität e1 quasi nicht korrigiert, da die Rückförderpumpe 111v ihre sie charakterisierende Förderleistung erreicht hat.

Mit der Abfrage, die durch die Schritte 502 bis 507 realisiert ist, wird wenigstens ermittelt, ob sich die Rückförderpumpe 111v in einer Anlaufphase befindet oder nicht.

Im Anschluß an den Schritt 507 wird der Schritt 508 ausgeführt. Im Schritt 508 ist der Betrag der Größe aymess, welcher die am Fahrzeug angreifende Querbeschleunigung repräsentiert mit einem Schwellwert Say verglichen. Ist der Betrag der Größe aymess größer als der Schwellwert Say, so wird nach dem Schritt 508 der Schritt 509 ausgeführt. Im Schritt 509 wird dem Zustandszeiger aye1 der Wert 1 zugewiesen. Im Anschluß an den Schritt 509 folgt der Schritt 510. Wird im Schritt 508 dagegen festgestellt, daß der Betrag der Größe aymess nicht größer ist als der Schwellwert Say, so wird nach dem Schritt 508 der Schritt 510 ausgeführt. Der Schwellwert Say stellt in diesem Zusammenhang eine Größe dar, ab der davon ausgegangen werden kann, daß die Kolben der Radbremszylinder in diese aufgrund der großen Querbeschleunigung hineingedrückt werden.

Im Schritt 510 wird überprüft, ob der ermittelte Bremskreisdruck pkreis1 für den Bremskreis I größer ist als ein Schwellwert Splb. Durch diese Abfrage soll festgestellt werden, ob der im Bremskreis I vorherrschende Bremskreisdruck pkreis1 ausreicht, die in die Radbremszylinder hineingedrückten Kolben wieder herauszudrücken. Dies ist dann der Fall wenn der Bremskreisdruck pkreis1 größer ist als der Schwellwert Splb. Wird im Schritt 510 festgestellt, daß der Bremskreisdruck pkreis1 größer ist als der Schwellwert Sp1b, so wird nach dem Schritt 510 der Schritt 511 ausgeführt, in welchem dem Zustandszeiger aye1 der Wert 0 zugewiesen wird. Im Anschluß an den Schritt 511 wird der Schritt 512 ausgeführt. Wird dagegen im Schritt 510 festgestellt, daß der Bremskreisdruck pkreis1 nicht größer ist als der Schwellwert Sp1b, so wird nach dem Schritt 510 der Schritt 512 ausgeführt.

Im Schritt 512 wird mit Hilfe einer Abfrage festgestellt, ob dem Zustandszeiger aye1 der Wert 1 zugewiesen ist. Ist dem Zustandszeiger aye1 der Wert 1 zugewiesen, so bedeutet dies, daß die Kolben der Radbremszylinder in diese hineingedrückt sind und der Bremskreisdruck pkreis1 nicht ausreicht, die Kolben wieder aus den Radbremszylindern herauszudrücken, und somit das zu Beginn des fahrerunabhängigen Druckaufbaus durch die Rückförderpumpe 111v geförderte Bremsmedium zum Herausdrücken der Kolben aus den Radbremszylindern aufgebracht werden muß und somit keinen Beitrag zur Erzeugung einer Bremskraft leisten kann. Um diese Tatsache zu berücksichtigen, wird im Anschluß an den Schritt 512 der Schritt 513 dann ausgeführt, wenn der Zustandszeiger aye1 den Wert 1 angenommen hat. Im Schritt 513 wird die Kompressibilität e1 mit einem Faktor eKorr1b korrigiert. Der Korrekturfaktor eKorr1b wird dabei in Abhängigkeit der ermittelten Querbeschleunigung aymess ermittelt. Im Anschluß an den Schritt 513 wird der Schritt 514 ausgeführt.

Wird dagegen im Schritt 512 festgestellt, daß dem Zustandszeiger aye1 nicht der Wert 1 zugewiesen ist, was gleichbedeutend damit ist, daß die Kolben der Radbremszylinder nicht in diese hineingedrückt sind, so wird im Anschluß an den Schritt 512 der Schritt 514 ausgeführt.

Durch die in den Schritten 508 bis 513 stattfindenden Abfragen und durch die Korrektur der Kompressibilität e1 wird das aufgrund großer Querbeschleunigungen auftretende Scheibenkippen- bzw. Lüftspiel in einer Bremsanlage berücksichtigt.

Im Schritt 514 wird ermittelt, ob gleichzeitig im Bremskreis I und im Bremskreis II ein Druckaufbau stattfindet. Diese Abfrage wird deshalb durchgeführt, da bei einem zweikreisigen Bremsdruckaufbau sich die Drehzahl der Rückförderpumpe 111v reduziert. Wird im Schritt 514 festgestellt, daß sowohl im Bremskreis I als auch im Bremskreis II ein Druckaufbau stattfindet, so wird im Anschluß an den Schritt 514 ein Schritt 515 ausgeführt, in welchem die Kompressibilität e1 mit einem Korrekturfaktor eKorr1c korrigiert wird. Im Anschluß an den Schritt 515 folgt der Schritt 516. Wird dagegen im Schritt 514 festgestellt, daß nicht gleichzeitig im Bremskreis I und im Bremskreis II ein Druckaufbau stattfindet, so wird im Anschluß an den Schritt 514 der Schritt 516 ausgeführt.

In Abhängigkeit der Schritte 514 bzw. 515 wird folglich festgestellt, ob in einem weiteren Bremskreis als dem Bremskreis I der Bremsanlage ein fahrerunabhängiger Druckaufbau durchgeführt wird, während die Rückförderpumpe 111v des Bremskreises I fördert.

Im Schritt 516 wird ein Zähler T111vleer, der die Förderdauer der Rückförderpumpe 111v beschreibt, während der die Rückförderpumpe 111v Bremsmedium fördert, mit einem Vergleichswert ST1 verglichen. Je größer der Wert des Zählers Tlllvleer ist, desto eher kann davon ausgegangen werden, daß die Rückförderpumpe 111v mit ihrer Leerlaufdrehzahl läuft. In diesem Fall ist die Förderleistung der Rückförderpumpe 111v unabhängig von ihrer Drehzahl. Ist dagegen die Drehzahl der Rückförderpumpe 111v kleiner als ihre Leerlaufdrehzahl, so muß davon ausgegangen werden, daß ihre Förderleistung drehzahlabhängig ist.

Ist der Zähler Tlllvleer kleiner als der Vergleichswert ST1, was gleichbedeutend damit ist, daß die Rückförderpumpe 111v ihre Höchstdrehzahl aufgrund des Zustandes im Bremskreis I noch nicht erreicht hat, so wird im Anschluß an den Schritt 516 ein Schritt 517 ausgeführt, in welchem der Zähler T111vleer um 1 erhöht wird. Im Anschluß an den Schritt 517 folgt ein Schritt 518. Wird dagegen im Schritt 516 festgestellt, daß der Zähler Tlllvleer größer als der Vergleichswert ST1 ist, was gleichbedeutend damit ist, daß die Rückförderpumpe 111v ihre Höchstdrehzahl erreicht hat, so wird im Anschluß an den Schritt 516 der Schritt 518 ausgeführt.

Im Schritt 518 wird eine Abfrage ausgeführt, mit der festgestellt wird, ob sich der Bremskreisdruck pkreis1 im Bremskreis I oder ob sich der Bremskreisdruck pkreis2 im Bremskreis II im vergleich zum vorigen Rechenzyklus geändert hat. Wird bei dieser Abfrage festgestellt, daß sich der Bremskreisdruck pkreis1 im Bremskreis I oder daß sich der Bremskreisdruck pkreis2 im Bremskreis II im Vergleich zum vorigen Rechenzyklus geändert hat, so wird als nächstes der Schritt 519 ausgeführt, in welchem dem Zähler Tlllvleer der Wert 0 zugewiesen wird. Hat sich der Bremskreisdruck pkreis1 im Bremskreis I noch der Bremskreisdruck pkreis2 im Bremskreis II im Vergleich zum vorigen Rechenzyklus geändert, so kann davon ausgegangen werden, daß die Rückförderpumpe 111v nicht mehr mit Höchstdrehzahl fördert, weswegen im Schritt 519 im Zähler Tlllvleer der Wert 0 zugewiesen wird. Bei dieser Abfrage werden beide Bremskreise berücksichtigt, da die Drehzahl der Rückförderpumpe 111v zum einen unmittelbar durch den Zustand des Bremskreises I und zum anderen über den Motor, der beide Rückförderpumpen 111i antreibt, auch mittelbar durch den Zustand des Bremskreises II beeinflußt wird.

Im Anschluß an den Schritt 519 wird der Schritt 520 ausgeführt. Wird dagegen im Schritt 518 festgestellt, daß sich weder der Bremskreisdruck pkreis1 im Bremskreis I noch der Bremskreisdruck pkreis2 im Bremskreis II im Vergleich zum vorigen Rechenzyklus nicht geändert hat, so wird nach dem Schritt 518 der Schritt 520 ausgeführt.

Im Schritt 520 wird der Zähler Tlllvleer mit einem Schwellwert STleer verglichen. Ist der Zähler Tlllvleer kleiner als der Schwellwert STleer, was gleichbedeutend damit ist, daß die Rückförderpumpe 111v nicht mit ihrer Leerlaufdrehzahl läuft, und somit die Förderleistung der Rückförderpumpe 111v drehzahlabhängig ist, so wird im Anschluß an den Schritt 520 ein Schritt 521 ausgeführt, in welchem die Kompressibilität e1 mit einem Faktor eKorr1d korrigiert wird. Mit dieser Korrektur der Kompressibilität e1 wird der Beeinflussung der Kompressibilität e1 aufgrund der drehzahlabhängigen Förderleistung der Rückförderpumpe 111v Rechnung getragen. In die Ermittlung des Korrekturfaktors eKorr1d geht wenigstens der Wert des Bremskreisdruckes pkreis1 ein. Im Anschluß an den Schritt 521 wird der Schritt 522 ausgeführt, mit dem die Korrektur der Kompressibilität e1 beendet wird.

Wird dagegen im Schritt 520 festgestellt, daß der Zähler Tlllvleer nicht kleiner als der Schwellwert STleer ist, was gleichbedeutend damit ist, daß die Rückförderpumpe 111v mit ihrer Leerlaufdrehzahl läuft und somit die Förderleistung der Rückförderpumpe 111v nicht drehzahlabhängig ist, so wird nach dem Schritt 520 der Schritt 522 ausgeführt.

Mit Hilfe der Schritte 516 bis 521 wird folglich bei der Bildung der Kompressibilität e1 die sich bei einem fahrerunabhängigen Druckaufbau ergebende Abhängigkeit der Förderleistung der Rückförderpumpe 111v wenigstens vom Bremskreisdruck pkreis1 berücksichtigt. Folglich wird dadurch das Förderverhalten der Rückförderpumpe 111v während eines fahrerunabhängigen Druckaufbaus erfaßt.

Abschließend sei festgehalten, daß es durchaus denkbar ist, lediglich einen der Teil der in Figur 5 beschriebenen Korrekturen durchzuführen.

In Figur 6 ist mit Hilfe eines Flußdiagrammes die im Schritt 304 stattfindende Ermittlung des Druckgradienten dpkreis1 für den Bremskreis I sowie die im Schritt 305 stattfindende Ermittlung des Druckes pkreis1 für den Bremskreisdruck I ausführlicher dargestellt. Die Ermittlungen starten mit einem Schritt 601. Im Anschluß an den Schritt 601 wird ein Schritt 602 ausgeführt. In diesem Schritt wird der Druckgradient dpkreis1 für den Bremskreis I in Abhängigkeit der Kompressibilität e1 und des Volumens uvolumen1, welches über das Vorladeventil 127v in den Bremskreis I eingespeist wird, ermittelt. Der Druckgradient dpkreis1 wird beispielsweise mittels Multiplikation der Kompressibilität e1 mit dem Volumen uvolumen1 ermittelt. Bei der Kompressibilität e1 handelt es sich dabei um die korrigierte Kompressibilität, wie sie sich gemäß Figur 5 ergibt. Bei dem Volumen uvolumen1 handelt es sich um das im Schritt 405 ermittelte Volumen. Ebenso wird im Schritt 602 der aktuelle Wert des Bremskreisdruckes pkreis1 aus dem vorhergehenden Wert des Bremskreisdruckes pkreis1 und dem Druckgradienten dpkreis1 ermittelt. Dies erfolgt beispielsweise dadurch, daß der aktuelle Wert aus dem vorhergehenden Wert durch aufaddieren des Druckgradienten hervorgeht. Im Anschluß an den Schritt 602 wird der Schritt 603 ausgeführt. Im Schritt 603 wird für den aktuellen Wert des Bremskreisdruckes pkreis1 eine Plausibilitätsabfrage durchgeführt. Hierzu wird der aktuelle Wert des Bremskreisdruckes pkreis1 mit der Summe aus dem Wert p125v und dem vom Fahrer eingestellten Bremsdruck Pvor verglichen. Die Größe p125v beschreibt hierbei das Druckverhalten des Druckbegrenzungsventiles 125v, welches im Umschaltventil 137v enthalten ist. Mit anderen Worten: Die Größe p125v repräsentiert den Druck im Bremskreis I, ab welchem das Druckbegrenzungsventil p125v den Bremskreis I mit dem Hauptbremszylinder 101 zum Abbau des im Bremskreis vorherrschenden Bremskreisdruckes verbindet. Wird im Schritt 603 festgestellt, daß der aktuelle Wert des Bremskreisdruckes pkreis1 größer ist als die Summe aus p125v und Pvor, was nicht plausibel ist, so wird nachfolgend Schritt 604 ausgeführt, in welchem dem aktuellen Wert des Bremskreisdruckes pkreis1 die Summe aus p125v sowie Pvor zugewiesen wird. Im Anschluß an den Schritt 604 wird ein Schritt 605 ausgeführt. Wird dagegen im Schritt 603 festgestellt, daß der aktuelle Wert des Bremskreisdruckes pkreis1 kleiner ist als die Summe aus p125v und Pvor, was plausibel ist, so wird nach dem Schritt 603 der Schritt 605 ausgeführt.

Im Schritt 605 wird der aktuelle Wert des Bremskreisdruckes pkreis1 mit dem vom Fahrer eingestellten Vordruck Pvor verglichen. Findet für den Bremskreis I kein fahrerunabhängig durchgeführter Druckaufbau statt, so wird über das Rückschlagventil 126v in den Bremskreis I der vom Fahrer eingestellte Vordruck Pvor eingespeist. Diesem Umstand wird durch die im Schritt 605 stattfindende Abfrage Rechnung getragen. Wird durch die Abfrage im Schritt 605 festgestellt, daß der aktuelle Wert für den Bremskreisdruck I kleiner ist als der vom Fahrer eingestellte Vordruck Pvor, was nicht plausibel ist, so wird im Anschluß an den Schritt 605 ein Schritt 606 ausgeführt, in welchem dem aktuellen Wert für den Bremskreisdruck pkreis1 der vom Fahrer eingestellte Vordruck Pvor zugewiesen wird. Im Anschluß an den Schritt 606 wird der Schritt 607 ausgeführt, mit welchem die Ermittlung des Druckgradienten dpkreis1 sowie die Ermittlung des Bremskreisdruckes pkreis1 abgeschlossen wird. Dagegen im Schritt 605 festgestellt, daß der aktuelle Wert des Bremskreisdruckes pkreis1 größer ist als der vom Fahrer eingestellte Vordruck, was plausibel ist, so wird im Anschluß an den Schritt 605 der Schritt 607 ausgeführt.

In den Figuren 7 und 8 wird die im Schritt 306 ablaufende Abfrage, ob im Bremskreis I ein Druckabbau vorliegt, sowie die im Schritt 307 für den Fall eines im Bremskreis I vorliegenden Druckabbaus durchgeführte Reduktion des Druckes pkreis1 für den Bremskreis I näher beschrieben. In Figur 7 ist die Vorgehensweise beschrieben, die angewandt wird, wenn der tatsächliche Bremskreisdruck des Bremskreises I innerhalb eines aktiven, d.h. fahrerunabhängig durchgeführten Druckaufbaus abgebaut wird. In Figur 8 ist die Vorgehensweise beschrieben, die angewandt wird, wenn der tatsächliche Bremskreisdruck im Bremskreis I außerhalb der Regelung d.h. außerhalb eines fahrerunabhängig durchgeführten Druckaufbaus bzw. nach Beendigung eines fahrerunabhängig durchgeführten Druckaufbaus abgebaut wird.

Die in Figur 7 dargestellte Reduktion des für den Bremskreis I ermittelten Druckes pkreis1 für den Fall eines Abbaus des tatsächlich im Bremskreis I vorliegenden Kreisdruckes innerhalb einer Regelung startet mit dem Schritt 701. Im Anschluß an den Schritt 701 wird ein Schritt 702 ausgeführt. Mit der im Schritt 702 ausgeführten Abfrage wird ermittelt, ob im Bremskreis I ein aktiver d.h. ein fahrerunabhängig durchgeführter Druckaufbau stattfindet und ob während dieses fahrerunabhängig durchgeführten Druckaufbaus im druckhöheren Rad im Bremskreis I ein Druckabbau verlangt wird. Ob im Bremskreis I ein fahrerunabhängig durchgeführter Druckaufbau durchgeführt wird, kann beispielsweise ausgehend von den Ansteuersignalen der Rückförderpumpe 111v ermittelt werden. Ob im druckhöheren Rad im Bremskreis I ein Druckabbau verlangt wird, kann beispielsweise durch Abfrage der Ansteuersignale der Auslaßventile 114vj ermittelt werden. Wird im Schritt 702 festgestellt, daß im Bremskreis I ein fahrerunabhängig durchgeführter Druckaufbau vorliegt und gleichzeitig im druckhöheren Rad des Bremskreises I ein Druckabbau verlangt wird, so wird im Anschluß an den Schritt 702 der Schritt 703 ausgeführt. Der Schritt 703 wird einem Zwischenspeicher pk der Wert prad105vjmax des Radbremszylinderdruckes des druckhöheren Rades im Bremskreis I zugewiesen. Im Anschluß an den Schritt 703 wird ein Schritt 704 ausgeführt. Im Schritt 704 wird abgefragt, ob der ermittelte Wert pkreis1 des Bremskreisdruckes für den Bremskreis I kleiner ist als der Wert des Zwischenspeichers pk. Ist der Wert pkreis1 des Bremskreisdruckes kleiner als der Wert des Zwischenspeichers, so wird in einem Schritt 705 der Variablen pKreisZiel1, die den nach dem Druckabbau zu erwartenden Bremskreisdruck beschreibt, der Wert pkreis1 zugewiesen. Im Anschluß an den Schritt 705 wird ein Schritt 707 ausgeführt.

Wird dagegen im Schritt 704 festgestellt, daß der Wert pkreis1 für den Bremskreisdruck des Bremskreises I größer ist als der Wert des Zwischenspeichers pk so wird nach dem Schritt 704 ein Schritt 706 ausgeführt, in welchem der variablen pKreisZiel1 der Wert des Zwischenspeichers pk zugewiesen wird. Im Anschluß an den Schritt 706 wird der Schritt 707 ausgeführt.

Im Schritt 707 wird ausgehend vom aktuellen Wert pkreis1 des Bremskreisdruckes für den Bremskreis I sowie ausgehend vom Wert pKreisZiel1 und einer das Druckabnahmeverhalten im Bremskreis I beschreibende Größe abkreis1 der sich während des Druckabbaus im Bremskreis I einstellende Wert pkreis1 des Bremsdruckes ermittelt. Die im Schritt 707 gewählte Ermittlung des Wertes des Bremskreisdruckes kann mit einer Filterung des Wertes pkreis1 mit Hilfe eines Tiefpasses verglichen werden. Im Anschluß an den Schritt 707 wird ein Schritt 708 ausgeführt.

Wird dagegen im Schritt 702 festgestellt, daß nicht gleichzeitig ein fahrerunabhängig durchgeführter Druckaufbau im Bremskreis I und ein Druckabbau im druckhöheren Rad des Bremskreises I verlangt wird, so wird im Anschluß an den Schritt 702 der Schritt 708 ausgeführt. Mit dem Schritt 708 wird die Ermittlung des Bremskreisdruckes pkreis1 für den Bremskreis I während des Druckabbaus beendet.

Die in Figur 8 dargestellte Ermittlung des Bremskreisdruckes pkreis1 für den Fall, daß außerhalb der Regelung bzw. nach einem fahrerunabhängig Druckaufbau im Bremskreis 1 ein Druckabbau stattfindet, startet mit einem Schritt 801. Im Anschluß an den Schritt 801 wird ein Schritt 802 ausgeführt.

Im Schritt 802 wird ermittelt, ob im Bremskreis I ein aktiver d.h. fahrerunabhängig durchgeführter Druckaufbau stattfindet. Dies kann beispielsweise durch Abfrage der Ansteuersignal der Rückförderpumpe 111v erfolgen. Wird im Schritt 802 festgestellt, daß im Bremskreis I kein aktiver d.h. fahrerunabhängig durchgeführter Druckaufbau vorliegt, so wird im Anschluß an den Schritt 802 ein Schritt 803 ausgeführt. Im Schritt 803 wird der das zu erwartende Druckabnahmeverhalten beschreibenden Größe abkreis1 ein Wert tau0kreis1 zugewiesen. Die Größe tau0kreis1, die in diesem Zusammenhang auch als Zeitkonstante betrachtet werden kann, beschreibt eine langsame Abnahme des Bremskreisdruckes pkreis1. Im Anschluß an den Schritt 803 wird ein Schritt 804 ausgeführt. Wird dagegen im Schritt 802 festgestellt, daß im Bremskreis I ein aktiver, d.h. fahrerunabhängig durchgeführter Druckaufbau stattfindet, so wird im Anschluß an den Schritt 802 der Schritt 804 ausgeführt.

Im Schritt 804 wird abgefragt, ob der Wert pkreis1 des Bremskreisdruckes im Bremskreis I größer ist als ein Schwellwert PRFPmax, der den Maximaldruck Vorladepumpe 111v beschreibt. Wird festgestellt, daß der Wert pkreis1 des Bremskreisdruckes größer ist als dieser Schwellwert, so wird im Anschluß an den Schritt 804 ein Schritt 805 ausgeführt. Im Schritt 805 wird der Größe abkreis1, die das zu erwartende Druckabnahmeverhalten beschreibt, ein Wert tau1kreis1 zugewiesen. Der Wert tau1kreis1 repräsentiert eine Zeitkonstante für einen Druckabbau, der mit einer mittleren Abnahmegeschwindigkeit verläuft. Ferner wird im Schritt 805 der Größe pKreisZiel1, die den zu erwartenden Bremskreisdruck nach dem Druckabbau beschreibt, ein Wert p1kreis1 zugewiesen. Dieser Wert p1kreis1 stellt vorzugsweise einen kleinen dar. Im Anschluß an den Schritt 805 wird ein Schritt 806 ausgeführt. Wird im Schritt 804 dagegen festgestellt, daß der Wert pkreis1 des Bremskreisdruckes im Bremskreis I kleiner ist als der Schwellwert PRFPmax, so wird im Anschluß an den Schritt 804 der Schritt 806 ausgeführt.

Im Schritt 806 wird abgefragt, ob im Bremskreis II kein aktiver, d.h. fahrerunabhängig durchgeführter Druckaufbau stattfindet. Wird im Schritt 806 festgestellt, daß im Bremskreis II kein fahrerunabhängig durchgeführter Druckaufbau stattfindet, so wird im Anschluß an den Schritt 806 ein Schritt 807 ausgeführt. Im Schritt 807 wird der Größe pKreisZie1 ein Wert p2kreis1 zugewiesen. Der Wert p2kreis1 repräsentiert einen kleinen Druckwert, der nach dem Druckabbau erwartet wird. Dabei ist der Wert p2kreis1 kleiner als der Wert p1kreis1. Im Anschluß an den Schritt 807 wird ein Schritt 808 ausgeführt. Wird im Schritt 806 dagegen festgestellt, daß im Bremskreis II ein aktiver Druckaufbau stattfindet, so wird im Anschluß an den Schritt 806 ein Schritt 808 ausgeführt.

Im Schritt 808 wird, wie bereits im Zusammenhang mit dem Schritt 707 beschrieben, der Wert pkreis1 des Bremskreisdruckes den Bremskreis I ermittelt. Die Ermittlung des Bremskreisdruckes pkreis1 wird mit dem auf den Schritt 808 folgenden Schritt 809 beendet.

Abschließend sei mit Bezug auf die in der Zeichnung enthaltenen Flußdiagramme darauf hingewiesen, daß die in einzelnen Schritten enthaltenen Gleichungen keine mathematischen Gleichungen sondern Zuweisungen darstellen. Ferner sei bemerkt, daß die in den Figuren gewählte spezielle Ausgestaltung des erfindungsgemäßen Verfahrens bzw. der erfindungsgemäßen Vorrichtung keine Einschränkung darstellen soll.

## Patentansprüche

1. Bremsanlage (100) für ein Fahrzeug, die wenigstens einen Bremskreis (107, 108) enthält,
wobei dem Bremskreis (107, 108) wenigstens ein Rad zugeordnet ist, dessen Radbremszylinder (138ij) über ein erstes Mittel (113ij, 114ij) mit dem Bremskreis in Verbindung steht, wobei mit dem ersten Mittel am Radbremszylinder (138ij) die Zustände Druckaufbau und/oder Druckhalten und/oder Druckabbau einstellbar sind,
wobei der Bremskreis (107, 108) ferner wenigstens zweite Mittel enthält, mit denen wenigstens im Radbremszylinder (138ij) des einen Rades ein fahrerunabhängiger Druckaufbau durchführbar ist, wobei die zweiten Mittel zur Realisierung des fahrerunabhängigen Druckaufbaus wenigstens eine Pumpe (111i) aufweisen,
wobei ferner dritte Mittel vorgesehen sind, mit denen wenigstens für den einen Bremskreis (107, 108) eine den Bremskreisdruck repräsentierende Größe (pKreis1) ermittelbar ist, **dadurch gekennzeichnet,**
**daß** hierzu in den dritten Mitteln wenigstens das mit vierten Mitteln erfaßte Förderverhalten der Pumpe (111i) während des fahrerunabhängigen Druckaufbaus berücksichtigt wird.

2. Bremsanlage nach Anspruch 1, **dadurch gekennzeichnet,**
**daß** das mit den vierten Mitteln während eines fahrerunabhängigen Druckaufbaus erfaßte Förderverhalten der Pumpe (111i) in eine den Zustand des Bremskreises beschreibende Größe (e1), insbesondere in die Kompressibilität (302) des Bremskreises eingeht, die in fünften Mitteln ermittelt wird, und
**daß** die den Bremskreisdruck repräsentierende Größe (pKreis1) wenigstens in Abhängigkeit der den Zustand des Bremskreises beschreibenden Größe (e1) ermittelt wird.

3. Bremsanlage nach Anspruch 2, **dadurch gekennzeichnet,**
**daß** das erste Mittel wenigstens aus einem Einlaßventil (113ij) besteht, und
**daß** die mit den fünften Mitteln ermittelte Größe (e1), die den Zustand des Bremskreises beschreibt, wenigstens in Abhängigkeit der Anzahl der in dem Bremskreis geöffneten Einlaßventile (113ij) bzw. in Abhängigkeit des Wertes der den Bremskreisdruck (pKreis1) repräsentierenden Größe ermittelt wird.

4. Bremsanlage nach Anspruch 1, **dadurch gekennzeichnet,**
**daß** ferner sechste Mittel vorhanden sind, in denen wenigstens ausgehend von der den Zustand des Bremskreises beschreibenden Größe (e1) eine Größe ermittelt wird, die die zeitliche Änderung (dpKreis1) des Bremskreisdruckes (pKreis1) beschreibt, und
**daß** in den dritten Mitteln der aktuelle Wert für die den Bremskreisdruck repräsentierende Größe (pKreis1) wenigstens in Abhängigkeit der Größe, die die zeitliche Änderung des Bremskreisdruckes (dpKreis1) beschreibt bzw. in Abhängigkeit eines vorhergehenden Wertes für die den Bremskreisdruck repräsentierende Größe ermittelt wird.

5. Bremsanlage nach Anspruch 4, **dadurch gekennzeichnet,**
**daß** das zweite Mittel neben der Pumpe (111i) wenigstens ein erstes Ventil, insbesondere ein Vorladeventil (127i) enthält, über welches mit Hilfe der Pumpe (111i) aus einem in der Bremsanlage enthaltenen Hauptbremszylinder Bremsmedium in den Radbremszylinder (138ij) förderbar ist, und
**daß** in den sechsten Mitteln bei der Ermittlung der die zeitliche Änderung des Bremskreisdruckes beschreibenden Größe (dpKreis1) ferner eine Größe berücksichtigt wird, die das über das erste Ventil (127i) in den Bremskreis geförderte Volumen repräsentiert.

6. Bremsanlage nach Anspruch 5, **dadurch gekennzeichnet,**
**daß** eine die Ansteuerzeit des ersten Ventils (127i) beschreibende Größe (T127v) ermittelt wird, ausgehend von der die Größe ermittelt wird, die das über das erste Ventil (127i) in den Bremskreis geförderte Volumen repräsentiert.

7. Bremsanlage nach Anspruch 5, **dadurch gekennzeichnet,**
**daß** der Bremskreis ferner wenigstens eine Speicherkammer (115) enthält, in die im Zustand Druckabbau über das dem Radbremszylinder (138ij) zugeordnete erste Mittel, insbesondere über ein im ersten Mittel enthaltenes Auslaßventil (114vr), Bremsmedium aus dem Radbremszylinder zuführbar ist, und
**daß** bei der Ermittlung der Größe, die das über das erste Ventil (127i) in den Bremskreis geförderte Volumen repräsentiert, das Volumen des in der Speicherkammer (115) gespeicherten Bremsmediums mitberücksichtigt wird.

8. Bremsanlage nach Anspruch 6 und 7, **dadurch gekennzeichnet,**
**daß** das Volumen des in der Speicherkammer (115) gespeicherten Bremsmediums dergestalt mitberücksichtigt wird, daß die die Ansteuerzeit des ersten Ventils (127i) beschreibende Größe (T127v) in Abhängigkeit des Volumens des in der Speicherkammer (115) gespeicherten Bremsmediums beeinflußt wird.

9. Bremsanlage nach Anspruch 1, **dadurch gekennzeichnet,**
**daß** in den vierten Mitteln zur Erfassung des Förderverhaltens der Pumpe (111i) während eines fahrerunabhängigen Druckaufbaus, als ein Kriterium hierfür wenigstens berücksichtigt wird, ob sich die Pumpe (111i) in einer Anlaufphase befindet, und/oder
**daß** in den vierten Mitteln zur Erfassung des Förderverhaltens der Pumpe (111i) während eines fahrerunabhängigen Druckaufbaus, als ein Kriterium hierfür wenigstens eine sich aus dem Bremskreisdruck ergebende Abhängigkeit der Förderleistung der Pumpe berücksichtigt wird, und/oder
**daß** in den vierten Mitteln zur Erfassung des Förderverhaltens der Pumpe (111i) während eines fahrerunabhängigen Druckaufbaus, als ein Kriterium hierfür wenigstens berücksichtigt wird, ob in einem weiteren Bremskreis (107, 108) der Bremsanlage ein fahrerunabhängiger Druckaufbau durchgeführt wird, während die Pumpe (111i) fördert, und
**daß** in den vierten Mitteln in Abhängigkeit wenigstens eines Kriteriums wenigstens ein Faktor ermittelt wird, mit dem die den Zustand des Bremskreises beschreibende Größe bewertet wird.

10. Bremsanlage nach Anspruch 1, **dadurch gekennzeichnet,**
**daß** in den vierten Mitteln ferner eine Größe berücksichtigt wird, die eine am Fahrzeug auftretende Querbeschleunigung (ay) repräsentiert, und die in die Ermittlung der den Zustand des Bremskreises beschreibenden Größe (e1) eingeht.

11. Bremsanlage nach Anspruch 1, **dadurch gekennzeichnet,**
**daß** die mit den dritten Mitteln ermittelte Größe, die den Bremskreisdruck (pKreis1) repräsentiert, auf einen minimalen bzw. auf einen maximalen Wert begrenzt wird.

12. Bremsanlage nach Anspruch 11, **dadurch gekennzeichnet,**
**daß** in der Bremsanlage ferner ein Sensor (133) vorgesehen ist, mit dem der vom Fahrer im Bremskreis eingestellte Druck (Pvor) erfaßbar ist, und
**daß** dieser vom Fahrer eingestellte Druck (Pvor) in den dritten Mitteln als minimaler Wert für den Bremskreisdruck verwendet wird.

13. Bremsanlage nach Anspruch 11, **dadurch gekennzeichnet,**
**daß** die zweiten Mittel ferner wenigstens ein Ventil, insbesondere ein Umschaltventil (127i) enthalten, über welches mit Hilfe der Pumpe (111i) aus dem Radbremszylinder in einen in der Bremsanlage enthaltenen Hauptbremszylinder (101) Bremsmedium förderbar ist, und
**daß** wenigstens eine das Druckverhalten des wenigstens einen Ventils beschreibende Größe in den in den dritten Mitteln verwendeten maximalen Wert für den Bremskreisdruck eingeht.

14. Bremsanlage nach Anspruch 1, **dadurch gekennzeichnet,**
**daß** die Bremsanlage wenigstens einen Regler (120) zur Realisierung einer Bremsschlupfregelung und/oder zur Realisierung einer Antriebsschlupfregelung und/oder zur Realisierung einer Regelung einer die Fahrzeugbewegung beschreibenden Größe enthält, und
**daß** die den Bremskreisdruck repräsentierende Größe (pKreis1) in dem Regler verarbeitet wird.

15. Bremsanlage für ein Fahrzeug, die wenigstens einen Bremskreis (107, 108) enthält,
wobei dem Bremskreis (107, 108) wenigstens ein Rad zugeordnet ist, dessen Radbremszylinder (138ij) über ein erstes Mittel (113ij, 114ij) mit dem Bremskreis in Verbindung steht, wobei mit dem ersten Mittel am Radbremszylinder (138ij) die Zustände Druckaufbau und/oder Druckhalten und/oder Druckabbau einstellbar sind,
wobei ferner zweite Mittel vorgesehen sind, mit denen wenigstens für den einen Bremskreis (107, 108) eine den Bremskreisdruck repräsentierende Größe (pKreis1) ermittelbar ist,
**dadurch gekennzeichnet,**
**daß** bei einem Druckabbau, in den zweiten Mitteln die den Bremskreisdruck repräsentierende Größe (pKreis1) wenigstens in Abhängigkeit einer mit dritten Mitteln ermittelten Größe (pKreisZiel1) ermittelt wird, die den zu erwartenden Bremskreisdruck nach dem Druckabbau beschreibt.

16. Bremsanlage nach Anspruch 15, **dadurch gekennzeichnet,**
**daß** bei der Ermittlung der den Bremskreisdruck repräsentierenden Größe (pKreis1) ferner eine mit den dritten Mitteln ermittelte Größe (abKreis1), die das zu erwartende Druckabnahmeverhalten beschreibt, berücksichtigt wird.

17. Bremsanlage nach Anspruch 15, **dadurch gekennzeichnet,**
**daß** in den zweiten Mitteln die den Bremskreisdruck repräsentierende Größe (pKreis1) mit Hilfe eines mathematischen Modells, welches insbesondere einen Tiefpaß beschreibt, ermittelt wird.

18. Verfahren zur Ermittlung einer Größe, die den Bremskreisdruck in einem in einer Bremsanlage (100) enthaltenen Bremskreis (107, 108) repräsentiert,
wobei der Bremskreis (107, 108) Mittel enthält, mit denen für wenigstens ein Rad in dem dem Rad zugeordneten Radbremszylinder ein fahrerunabhängiger Druckaufbau durchführbar ist,
**dadurch gekennzeichnet,**
**daß** bei einem fahrerunabhängig durchgeführten Druckaufbau die den Bremskreisdruck repräsentierende Größe (pKreis1) wenigstens in Abhängigkeit einer den Zustand des Bremskreises beschreibenden Größe (e1) ermittelt wird, wobei bei der Ermittlung der den Zustand des Bremskreises beschreibenden Größe (e1) wenigstens das mit Erfassungsmitteln erfaßte Förderverhalten einer in den ersten Mitteln enthaltenen Pumpe (111i) während des fahrerunabhängigen Druckaufbaus berücksichtigt wird.

19. Verfahren zur Ermittlung einer Größe, die den Bremskreisdruck in einem in einer Bremsanlage enthaltenen Bremskreis (107, 108) repräsentiert,
wobei der Bremskreis (107, 108) Mittel enthält, mit denen für wenigstens ein Rad in dem dem Rad zugeordneten Radbremszylinder wenigstens ein Druckabbau durchführbar ist,
**dadurch gekennzeichnet,**
**daß** bei einem Druckabbau die den Bremskreisdruck repräsentierende Größe (pKreis1) wenigstens in Abhängigkeit einer Größe (pKreisZiel1) ermittelt wird, die den zu erwartenden Bremskreisdruck nach dem Druckabbau beschreibt.

## Claims

1. Brake system (100) for a vehicle, which contains at least one brake circuit (107, 108), at least one wheel whose wheel brake cylinder (138ij) is connected to the brake circuit via a first means (113ij, 114ij) being assigned to the brake circuit (107, 108), it being possible to set the increasing pressure and/or maintaining pressure and/or reducing pressure states at the wheel brake cylinder (138ij) using the first means, the brake circuit (107, 108) also containing at least second means with which a pressure increase which is independent of the driver can be carried out at least in the wheel brake cylinder (138ij) of the one wheel, the second means having at least one pump (111i) for implementing the pressure increase which is independent of the driver, in addition third means being provided with which at least a variable (pKreis1) representing the brake circuit pressure can be determined for the one brake circuit (107, 108), **characterized in that**, for this purpose, at least the feed behaviour of the pump (111i) sensed using fourth means is taken into account in the third means during the pressure increase which is independent of the driver.

2. Brake system according to Claim 1, **characterized**
**in that** the feed behaviour of the pump (111i) which is sensed using the fourth means during a pressure increase which is independent of the driver is included in a variable (e1) which describes the state of the brake circuit, in particular in the compressibility (302) of the brake circuit, which is determined in fifth means, and in that the variable (pKreis1) representing the brake circuit pressure is determined at least as a function of the variable (e1) describing the state of the brake circuit.

3. Brake system according to Claim 2, **characterized**
**in that** the first means is composed of at least one inlet valve (113ij), and in that the variable (e1) which is determined using the fifth means and which describes the state of the brake circuit is determined at least as a function of the number of the inlet valves (113ij) which are opened in the brake circuit or as a function of the value of the variable representing the brake circuit pressure (pKreis1).

4. Brake system according to Claim 1, **characterized**
**in that** in addition sixth means are provided in which a variable which describes the change (dpKreis1) of the brake circuit pressure (pkreis1) over time is determined at least on the basis of the variable (e1) describing the state of the brake circuit, and
**in that**, in the third means, the current value for the variable (pKreis1) representing the brake circuit pressure is determined at least as a function of the variable which describes the change in the brake circuit pressure (dpKreis1) over time or as a function of a preceding value for the variable representing the brake circuit pressure.

5. Brake system according to Claim 4, **characterized**
**in that** the second means contains both the pump (111i) and at least one first valve, in particular a precharging valve (127i) by means of which brake fluid can be fed into the rear brake cylinder (138ij) from a master brake cylinder contained in the brake system, using the pump (111i), and
**in that** in addition a variable which represents the volume fed into the brake circuit via the first valve (127i) is taken into account in the sixth means in the determination of the variable (dpKreis1) representing the change in the brake circuit pressure over time.

6. Brake system according to Claim 5, **characterized**
**in that** a variable (T127v) describing the actuation time of the first valve (127i) is determined, and on the basis of this the variable which represents the volume fed into the brake circuit via the first valve (127i) is determined.

7. Brake system according to Claim 5, **characterized**
**in that** the brake circuit also contains a storage chamber (115) into which, in the pressure decreasing state, brake fluid can be fed from the wheel brake cylinder via the first means assigned to the wheel brake cylinder (138ij), in particular via an outlet valve (114vr) contained in the first means, and in that the volume of the brake fluid stored in the storage chamber (115) is also taken into account in the determination of the variable which represents the volume fed into the circuit via the first means (127i).

8. Brake system according to Claims 6 and 7, **characterized in that** the volume of the brake fluid stored in the storage chamber (115) is also taken into account in such a way that the variable (T127v) describing the actuation time of the first valve (127i) is influenced as a function of the volume of the brake fluid stored in the storage chamber (115).

9. Brake system according to Claim 1, **characterized**
**in that**, in order to sense the feed behaviour of the pump (111i) during a pressure increase which is independent of the driver, it is at least taken into account in the fourth means for this as a criterion, whether the pump (111i) is in a start up phase, and/or
**in that**, in order to sense the feed behaviour of the pump (111i) during a pressure increase which is independent of the driver, at least a dependence of the feed power of the pump which results from the brake circuit pressure is taken into account for this as a criterion in the fourth means, and/or
**in that**, in order to sense the feed behaviour of the pump (111i) during a pressure increase which is independent of the driver, it is taken into account in the fourth means, as a criterion for this, at least whether the pressure increase which is independent of the driver is carried out in a further brake circuit (107, 108) of the brake system, while the pump (111i) is feeding, and
**in that**, in the fourth means, at least one factor with which the variable described in the state of the brake circuit is evaluated is determined in the fourth means as a function of at least one criterion.

10. Brake system according to Claim 1, **characterized**
**in that** in addition a variable which represents a transverse acceleration (ay) occurring at the vehicle and which is included in the determination of the variable (e1) describing the state of the brake circuit is taken into account in the fourth means.

11. Brake system according to Claim 1, **characterized**
**in that** the variable which is determined with the third means and which represents the brake circuit pressure (pKreis1) is limited to a minimum value or to a maximum value.

12. Brake system according to Claim 11, **characterized**
**in that** in addition a sensor (133) with which the pressure (Pvor) which is set in the brake circuit by the driver can be sensed is provided in the brake system, and
**in that** this pressure (Pvor) which is set by the driver is used as a minimum value for the brake circuit pressure in the third means.

13. Brake system according to Claim 11, **characterized**
**in that** the second means contain in addition at least one valve, in particular a change-over valve (127i) by means of which brake fluid can be fed from the wheel brake cylinder into a master brake cylinder (101) contained in the brake system, using the pump (111i), and in that at least one variable describing the pressure behaviour of the at least one valve is included in the maximum value - used in the third means - for the brake circuit pressure.

14. Brake system according to Claim 1, **characterized**
**in that** the brake system contains at least one controller (120) for implementing a brake slit control and/or for implementing a traction control and/or for implementing a control of a variable describing the movement of the vehicle and
**in that** the variable (pKreis1) representing the brake circuit pressure is processed in the controller.

15. Brake system for a vehicle, which contains at least one brake circuit (107, 108),
at least one wheel whose wheel brake cylinder (138ij) is connected to the brake circuit via a first means (113ij, 114ij) being assigned to the brake circuit (107, 108), it being possible to set the increasing pressure and/or maintaining pressure and/or decreasing pressure states at the wheel brake cylinder (138ij) using a first means,
in addition second means being provided with which a variable (pKreis1) representing the brake circuit pressure can be determined at least for the one brake circuit (107, 108),
**characterized in that** when there is a pressure decrease the variable (pKreis1) representing the brake circuit pressure is determined in the second means at least as a function of a variable (pKreisZiel1) which is determined using third means and which describes the expected brake circuit pressure after the pressure decrease.

16. Brake system according to Claim 15, **characterized**
**in that** in addition a variable (abKreis1) which is determined using the third means and which describes the expected pressure decreasing behaviour is taken into account in the determination of the variable (pKreis1) representing the brake circuit pressure.

17. Brake system according to Claim 15, **characterized**
**in that** the variable (pKreis1) representing the brake circuit pressure is determined in the second means using a mathematical model which describes in particular a low-pass filter.

18. Method for determining a variable which represents the brake circuit pressure in a brake circuit (107, 108) contained in a brake system (100), the brake circuit (107, 108) containing means with which a pressure increase which is independent of the driver can be carried out for at least one wheel in the wheel brake cylinder assigned to the wheel,
**characterized in that**, where there is a pressure increase which is carried out independently of the driver, the variable (pKreis1) representing the brake circuit pressure is determined at least as a function of a variable (e1) describing the state of the brake circuit, at least the feed behaviour - sensed using sensing means - of a pump (111i) contained in the first means being taken into account during the pressure increase which is independent of the driver in the determination of the variable (e1) describing the state of the brake circuit.

19. Method for determining a variable which represents the brake circuit pressure in a brake circuit (107, 108) contained in a brake system, the brake circuit (107, 108) containing means with which at least a pressure decrease can be carried out for at least one wheel in the wheel brake cylinder assigned to the wheel,
**characterized in that**, when there is a pressure decrease, the variable (pKreis1) representing the brake circuit pressure is determined at least as a function of a variable (pKreisZiel1) which describes the expected brake circuit pressure after the pressure decrease.

## Revendications

1. Installation de freinage (100) pour un véhicule qui comprend au moins un circuit de freinage (107, 108), dans laquelle
au moins une roue est associée au circuit de freinage (107, 108) dont le cylindre de roue (138ij) est raccordé avec le circuit de freinage par un premier moyen (113ij, 114ij), le premier moyen sur le cylindre de roue (138ij), réglant les conditions de mise sous pression et/ou de maintien sous pression et/ou de réduction de pression,
le circuit de freinage (107, 108) comprend en outre au moins des deuxièmes moyens effectuant au moins dans le cylindre de roue (138ij) de l'une des roues, une mise sous pression indépendamment du conducteur, les deuxièmes moyens présentant au moins une pompe (111i) pour réaliser la mise sous pression indépendamment du conducteur, avec encore des troisièmes moyens prévus pour déterminer au moins une grandeur (pKreis1) représentant la pression du circuit de freinage pour le, au moins un, circuit de freinage (107, 108),
**caractérisée en ce que**
dans les troisièmes moyens on prend en compte au moins le comportement du débit de la pompe (111i) acquis par des quatrièmes moyens, pendant la mise sous pression indépendamment du conducteur.

2. Installation de freinage selon la revendication 1,
**caractérisée en ce que**
le comportement du débit de la pompe (111i) acquis par les quatrièmes moyens pendant une mise sous pression indépendamment du conducteur est introduit dans une grandeur (e1) représentant la condition du circuit de freinage, particulièrement dans la compressibilité (302) du circuit de freinage qui est déterminée dans des cinquièmes moyens, et la grandeur représentant la pression du circuit de freinage (pKreis1) est déterminée au moins en fonction de la grandeur (e1) représentant la condition du circuit de freinage.

3. Installation de freinage selon la revendication 2,
**caractérisée en ce que**
le premier moyen comprend au moins une vanne d'admission (113ij), et la grandeur (e1), qui représente la condition du circuit de freinage, déterminée par les cinquièmes moyens, est déterminée au moins en fonction du nombre de vannes d'admission (113ij) ouvertes dans le circuit de freinage, respectivement en fonction de la valeur de la grandeur représentant la pression du circuit de freinage (pKreis1).

4. Installation de freinage selon la revendication 1,
**caractérisée en ce qu'**
en outre des sixièmes moyens sont prévus, pour déterminer au moins, à partir de la grandeur (e1) représentant la condition du circuit de freinage, une grandeur (pKreis1) qui représente la variation temporelle (dpKreis1) de la pression du circuit de freinage, et dans les troisièmes moyens on détermine la valeur réelle pour la grandeur (pKreis1) représentant la pression du circuit de freinage au moins en fonction de la grandeur qui représente la variation temporelle de la pression du circuit de freinage (dpKreis1), respectivement en fonction d'une valeur précédente, pour la grandeur représentant la pression du circuit de freinage.

5. Installation de freinage selon la revendication 4,
**caractérisée en ce que**
le deuxième moyen comprend à côté de la pompe (111i) au moins une première vanne, en particulier une vanne de pré-chargement (127i) qui alimente, à l'aide de la pompe (111i), en fluide de freinage le cylindre de roue (138ij), à partir d'un cylindre de frein principal de l'installation de freinage, et dans des sixièmes moyens une autre grandeur, qui représente le volume engagé dans le circuit de freinage au-dessus de la première vanne (127i), est prise en considération pour la détermination de la grandeur (dpKreis1) représentant la variation temporelle de la pression du circuit de freinage.

6. Installation de freinage selon la revendication 5,
**caractérisée en ce qu'**
on détermine une grandeur (T127v) représentant la durée d'amorçage de la première vanne (127i) à partir de laquelle on détermine la grandeur qui représente le volume engagé dans le circuit de freinage au-dessus de la première vanne (127i).

7. Installation de freinage selon la revendication 5,
**caractérisée en ce que**
le circuit de freinage comprend en outre au moins une chambre d'accumulation (115), dans laquelle, en condition de réduction de pression, un fluide de freinage est fourni au cylindre de roue par le premier moyen associé au cylindre de roue (138ij), en particulier par une vanne d'admission (114vr) incluse dans le premier moyen, et pour la détermination de la grandeur qui représente le volume engagé par la première vanne (127i) dans le circuit de freinage, le volume du fluide de freinage enregistré dans la chambre d'accumulation (115) est également pris en considération.

8. Installation de freinage selon la revendication 6 et 7,
**caractérisée en ce que**
le volume du fluide de freinage enregistré dans la chambre d'accumulation (115) est également pris en considération de telle sorte que la grandeur (T127v) représentant la durée d'amorçage de la première vanne (127i) est influencée en fonction du volume du fluide de freinage enregistré dans la chambre d'accumulation (115).

9. Installation de freinage selon la revendication 1,
**caractérisée en ce que**
dans les quatrièmes moyens d'acquisition du comportement du débit de la pompe (111i), lors d'une mise sous pression indépendamment du conducteur, on prend en considération au moins ici comme critère le fait de savoir si la pompe (111i) se trouve dans une phase initiale, et/ou dans les quatrièmes moyens d'acquisition du comportement du débit de la pompe (111i), lors d'une mise sous pression indépendamment du conducteur, on prend en considération au moins ici comme critère une dépendance, produite par la pression du circuit de freinage, de la puissance de débit de la pompe, et/ou dans les quatrièmes moyens d'acquisition du comportement du débit de la pompe (111i), lors d'une mise sous pression indépendamment du conducteur, on prend en considération au moins ici comme critère le fait de savoir si dans un autre circuit de freinage (107, 108) de l'installation de freinage une mise sous pression indépendamment du conducteur est réalisée lorsque la pompe (111i) débite, et
dans les quatrièmes moyens au moins un facteur est déterminé en fonction au moins d'un critère selon lequel la grandeur représentant la condition du circuit de freinage est évaluée.

10. Installation de freinage selon la revendication 1,
**caractérisée en ce que**
dans les quatrièmes moyens, on prend en considération une autre grandeur, qui représente une accélération transversale (ay) se produisant sur le véhicule, et qui entre dans la détermination de la grandeur (e1) représentant la condition du circuit de freinage.

11. Installation de freinage selon la revendication 1,
**caractérisée en ce que**
la grandeur déterminée avec les troisièmes moyens qui représente la pression du circuit de freinage (pKreis1) est limitée par une valeur minimale, respectivement maximale.

12. Installation de freinage selon la revendication 11,
**caractérisée en ce que**
dans le dispositif de freinage un capteur (133) est en outre prévu pour saisir la pression (Pvor) réglée par le conducteur sur le circuit de freinage, et cette pression (Pvor) réglée par le conducteur est utilisée dans les troisièmes moyens comme valeur minimale pour la pression du circuit de freinage.

13. Installation de freinage selon la revendication 11,
**caractérisée en ce que**
les deuxièmes moyens comprennent en outre au moins une vanne, en particulier une vanne de transfert (127i), qui fournit à l'aide d'une pompe (111i) le fluide de freinage à partir du cylindre de roue dans un cylindre de frein principal (101) contenu dans l'installation de freinage, et au moins une grandeur représentant la tenue de la pression de la, au moins d'une, vanne entre dans la valeur maximale utilisée dans les troisièmes moyens dans la pression du circuit de freinage.

14. Installation de freinage selon la revendication 1,
**caractérisée en ce qu'**
elle comprend au moins un régulateur (120) pour réaliser un freinage anti-dérapage et/ou pour réaliser une accélération anti-dérapage et/ou pour réaliser un réglage d'une grandeur représentant le mouvement du véhicule, et
la grandeur (pKreis1) représentant la pression du circuit de freinage est traitée dans le régulateur.

15. Installation de freinage pour un véhicule qui au moins comprend un circuit de freinage (107, 108), dans laquelle
au moins une roue est associée au circuit de freinage (107, 108) dont le cylindre de roue (138ij) est raccordé avec le circuit de freinage par un premier moyen (113ij, 114ij), le premier moyen réglant sur le cylindre de roue (138i), les conditions de mise sous pression et/ou de maintien sous pression et/ou de réduction de pression,
des seconds moyens sont prévus pour déterminer au moins une grandeur représentant la pression du circuit de freinage (pKreis1) pour le, au moins un, circuit de freinage (107, 108),
**caractérisée en ce que**
lors d'une réduction de pression, dans les deuxièmes moyens, la grandeur (pKreis1) représentant la pression du circuit de freinage on détermine au moins en fonction d'une grandeur (pKreisZiell), déterminée par des troisièmes moyens et qui représente la pression du circuit de freinage attendue après la réduction de pression.

16. Installation de freinage selon la revendication 15,
**caractérisée en ce que**
lors de la détermination de la grandeur (pKreis1) représentant la pression du circuit de freinage, on prend en compte encore une autre grandeur (abKreis1) déterminée par les troisièmes moyens, qui représente le comportement de la diminution de pression attendue.

17. Installation de freinage selon la revendication 15,
**caractérisée en ce que**
dans les deuxièmes moyens la grandeur (pKreis1) représentant la pression du circuit de freinage est déterminée à l'aide d'un modèle mathématique qui représente en particulier un filtre passe-bas.

18. Procédé pour déterminer une grandeur qui représente la pression de freinage dans un circuit de freinage (107, 108) d'une installation de freinage (100),
le circuit de freinage (107, 108) comprenant des moyens pour effectuer une mise sous pression indépendamment du conducteur, pour au moins une roue dans le cylindre de roue associé à la roue,
**caractérisé en ce que**
lors d'une mise sous pression réalisée indépendamment du conducteur, la grandeur (pKreis1) représentant la pression du circuit de freinage est déterminée au moins en fonction d'une grandeur (e1) représentant la condition du circuit de freinage, en prenant en compte pour la détermination de la grandeur (e1) représentant la condition du circuit de freinage, au moins le comportement du débit saisi par des moyens d'acquisition d'une pompe (111i) prévue dans les premiers moyens lors de la mise sous pression indépendamment du conducteur.

19. Procédé pour déterminer une grandeur qui représente la pression de freinage dans un circuit de freinage (107, 108) d'une installation de freinage,
le circuit de freinage (107, 108) comprenant des moyens pour effectuer dans le cylindre de roue associé à la roue, au moins une réduction de pression pour au moins une roue,
**caractérisé en ce que**
pour une réduction de pression, la grandeur (pKreis1) représentant la pression du circuit de freinage est déterminée au moins en fonction d'une grandeur (pKreisZiel1) qui décrit la pression du circuit de freinage attendue après la réduction de pression.
